(19) Europäisches Patentamt
European Patent Office
Office européen des brevets

(11) **EP 1 416 146 B1**

(12) **EUROPEAN PATENT SPECIFICATION**

(45) Date of publication and mention
of the grant of the patent:
**08.08.2012 Bulletin 2012/32**

(51) Int Cl.:
*F02D 41/26* *(2006.01)*    *F02D 41/08* *(2006.01)*
*F02D 41/34* *(2006.01)*    *F02D 41/14* *(2006.01)*

(21) Application number: **03024704.3**

(22) Date of filing: **28.10.2003**

(54) **Internal combustion engine output control device**

Ausgangssteuerungsapparat für eine Brennkraftmaschine

Appareil de commande de sortie d'un moteur à combustion interne

(84) Designated Contracting States:
**DE ES FR GB IT**

(30) Priority: **29.10.2002 JP 2002315081**

(43) Date of publication of application:
**06.05.2004 Bulletin 2004/19**

(73) Proprietor: **Toyota Jidosha Kabushiki Kaisha
Toyota-shi, Aichi 471-8571 (JP)**

(72) Inventor: **Ito, Yoshiyasu
Toyota-shi,
Aichi-ken 471-8571 (JP)**

(74) Representative: **TBK
Bavariaring 4-6
80336 München (DE)**

(56) References cited:
**EP-A1- 0 261 473    EP-A2- 0 152 287
US-A- 5 319 558    US-A- 6 085 720**

**Description**

BACKGROUND OF THE INVENTION

**1.** Field of the Invention

The invention relates to an internal combustion engine output control device for calculating a control amount of an output from the internal combustion engine (hereinafter, referred to as an "engine output control amount") based on a rotational speed of the internal combustion engine (hereinafter, referred to as an "engine speed") using an arithmetic processing circuit, and for controlling an output from the internal combustion engine (hereinafter, referred to as an "engine output") based on the engine output control amount.

2. Description of the Related Art

As a method for detecting an engine speed for setting an operation parameter of a multi-cylinder internal combustion engine, there is known technology which uses an entire or part of an angle range that is obtained by dividing a rotation angle of a crank shaft for one cycle by the number of cylinders, for example, as disclosed in page 3 and FIG. 1 in Japanese Patent Publication No. 63-67145. The technology enables prompt control by evaluating contribution of the operation stroke of each cylinder.

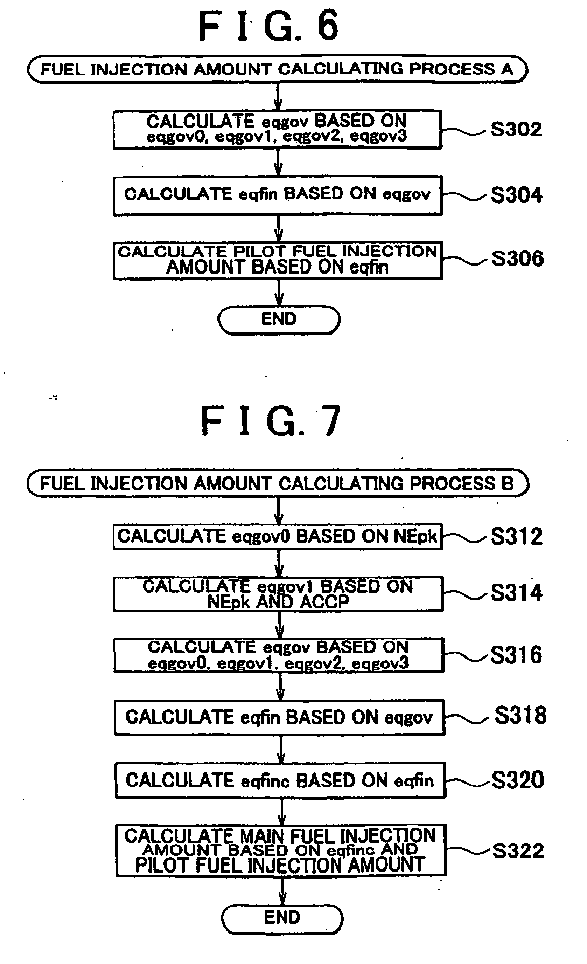

In such detection of an engine speed, there is particularly known technology for detecting a peak engine speed corresponding to each combustion (explosion) stroke, setting a fuel injection amount based on the peak engine speed, and controlling an output with high responsiveness such that hunting and engine stalling during transition of the engine speed are prevented, for example, as disclosed in pages 5 to 7 and FIGS. 6 and 7 in Japanese Patent Laid-Open Publication No. 3-70842.

In order to realize both high responsiveness to rotation fluctuations and prevention of hunting during idling, there is known technology for enabling adjustment of inclination of a governor pattern during idling for each diesel engine, for example, as disclosed in pages 4 and 5, and FIG. 4 in Japanese Patent No. 2513262.

As disclosed in Japanese Patent Laid-Open Publication No. 3-70842, in order to control an engine output with high responsiveness based on a peak engine speed, it is necessary to calculate a fuel injection amount during a period after detection of the peak engine speed and until a start of fuel injection to a cylinder targeted for the next fuel injection. More particularly, it is necessary to obtain an output control amount corresponding to an actual fuel injection amount after the fuel injection amount is calculated based on the peak engine speed and an accelerator opening and arithmetic computations on various corrections and restrictions are performed based on the fuel injection amount.

During idling and during transition of the engine speed when an engine speed is low, since the period from the completion of the detection of the peak engine speed until the start of the fuel injection is sufficiently long, there exists a margin for an arithmetic load which is processable during the period. Accordingly, even in an arithmetic processing circuit having a low processing speed, it is possible to complete the arithmetic processing of the fuel injection amount and another arithmetic processing (for example, calculation processing of a control amount directly or indirectly related to the fuel injection amount and another calculation processing) by the time at which each arithmetic result is required during the period.

However, when the engine speed increases, the period from the completion of the detection of the engine speed until the start of the fuel injection becomes considerably short. Accordingly, in the arithmetic processing circuit having a low processing speed, there is no margin for the arithmetic load which is processable during the period. Therefore, after the arithmetic processing of the fuel injection amount, even when another arithmetic processing is attempted to be performed, it is impossible to complete the arithmetic processing by the time at which arithmetic result is required.

Particularly, when the number of the cylinders is increased, the period becomes considerably short, and there is a possibility that not only the another arithmetic processing but also the arithmetic processing of the fuel injection amount is difficult to complete by the time at which the arithmetic result is required.

In the case where an arithmetic processing circuit having a high processing speed is employed, even when the engine speed is high, it is possible to complete the arithmetic processing of the fuel injection amount and the another arithmetic processing by the time at which each arithmetic result is required, which, however, results in an increase in cost of a control device.

There exist problems at the high engine speed also in art disclosed in Japanese Patent Publication No. 63-67145 and Japanese Patent Publication No. 2513262.

An engine control method timed to engine revolution is known from EP 0 261 473 A.

## SUMMARY OF THE INVENTION

It is an objection of the invention to provide an internal combustion engine output control device for preventing hunting and engine stalling and for providing a margin for an arithmetic load which is processable even when the engine speed increases, even in an arithmetic processing circuit having a low processing speed.

According to the invention, there is provided an internal combustion engine output control device as defined in claim 1.

According to the internal combustion engine output control device, when

the engine output is controlled based on the engine output control amount group which consists of a plurality of output control amounts, the calculation timing of the low speed side engine output control amount, which contributes to the engine output control in the low speed side among the engine output control amount group, is decided when either the first calculating means or the second calculating means functions.

When the engine speed is in the low speed region, the first calculating means functions, and calculates the low speed side engine output control amount at the first calculation timing which is provided in the period after the detection of the instantaneous engine speed until the engine output control timing. In the low speed region, since mainly the low speed side engine output control amount contributes to the engine output control among the engine output control amount group, the instantaneous engine speed is reflected on the output control with high responsiveness, and hunting and engine stalling can be prevented.

Hunting and engine stalling related to responsiveness are likely to be problems in the low speed region. The low speed side engine output control amount contributes to the output control in the low speed region. Outside the low speed region, another output control amount among the engine output control amount group contributes to the output control. Accordingly, outside the low speed region, it is not necessary to calculate the low speed side engine output control amount at the first calculation timing, and the low speed side output control amount may be calculated at the second calculation timing which is independent of the first calculation timing. Therefore, the second calculating means may function instead of the first calculating means, and calculate the engine output control amount at the second calculation timing.

Outside the low speed region, the second calculating means calculates the low speed side engine output control amount at the second calculation timing. Accordingly, a margin is provided for the arithmetic processing of the low speed side engine output control amount, and a margin is further provided for another arithmetic processing which needs to be calculated at the first calculation timing.

Accordingly, even in the internal combustion engine output control device which employs the arithmetic processing circuit having a low processing speed, hunting and engine stalling are prevented, and a margin can be provided for the arithmetic load which is processable even when the engine speed increases.

In addition, even when the calculation timing of the low speed side engine output control amount changes depending on whether the engine speed is in or outside the low speed region, outside the low speed region, the state is realized in which the engine output control amount which is used in the high speed side rather than in the low speed side is used for the output control. Accordingly, it is possible to prevent occurrence of a step in the output due to change of the calculation timing of the same output control amount.

>

When the second calculation timing which is used by the second calculating means is set in the internal combustion engine rotation angle (hereinafter, referred to as "engine rotation angle") that is prior to the first calculation timing, a time margin until the engine output control timing increases, and the margin for the arithmetic processing of the low speed side engine output control amount increases. Outside the low speed region, since the second calculating means changes timing of the arithmetic processing of the low speed side engine output control amount from the first calculation timing to the second calculation timing, the arithmetic load at the first calculation timing is reduced. Accordingly, a margin is provided for another arithmetic processing which needs to be calculated at the first calculation timing.

The engine output control amounts other than the low speed side engine output control amount among the engine output control amount group may be calculated simultaneously regardless of the engine speed by the third calculating means. Thus, the engine output control amounts other than the low speed side engine output control amount are independent of the first calculation timing. Accordingly, the arithmetic load at the first calculation timing is not increased, and a margin can be provided for another arithmetic processing which is performed at the first calculation timing.

The engine output control amounts other than the low speed side engine output control amount hardly contribute to the output control in the low speed side, particularly in the range related to hunting and engine stalling. Accordingly, even if the engine output control amounts other than the low speed side engine output control amount are calculated simultaneously instead of being calculated at the first calculation timing, there is no problem in accuracy.

It is preferable that the low speed side engine output control amount contribute to the engine output control in a region which is on the low speed side in the low speed region.

Since the region in which the low speed side engine output control amount is effective is on the low speed side in the low speed region, when the engine speed is changed from the low speed region to the region outside of the low speed region, the state is reliably realized in which the engine output control amount which is used in the high speed side rather than in the low speed side is used for the output control. Therefore, it is possible to prevent occurrence of a step in the output due to a step in the low speed side engine output control amount.

It is preferable that the low speed side engine output control amount be an output control amount which contributes to speed control during idling (hereinafter, referred to as "idle speed control").

An example of a low speed side engine output control amount is the engine output control amount which contributes to the idle speed control. During idling when the first calculating means functions, the engine speed is in the low speed region, and hunting and engine stalling are problems. However, since the instantaneous engine speed is reflected on the low speed side engine output control amount with high responsiveness, hunting and engine stalling can be prevented during idling.

It is preferable that the low speed side engine output control amount be an output control amount which contributes to prevention of engine stalling.

An example of the low speed side engine output control amount is the engine output control amount which contributes to the prevention of engine stalling. Since the engine output control amount for preventing engine stalling contributes to the output control in the low speed region in which the first calculating means functions, when the instantaneous engine speed is reflected on the low speed side engine output control amount with high responsiveness, engine stalling can be prevented effectively.

It is preferable that, when the engine output is controlled based on the engine output control amounts other than the low speed side engine output control amount, the engine output control amount be corrected based on a correction amount which is obtained while the engine output is controlled based on the low speed side engine output control amount.

Since the low speed side engine output control amount is calculated with high responsiveness in the low speed region, the basic correction amounts such as a learning value during the idle speed control are calculated with high accuracy. Accordingly, when the engine output control amounts other than the low speed side engine output control amount are corrected so as to be used based on the correction amount which is obtained while the engine output is controlled based on the low speed side engine output control amount, output control with higher accuracy can be realized in regions other than the low speed region.

It is preferable that the third calculating means calculate the engine output control amounts other than the low speed side engine output control amount among the engine output control amount group based on the internal combustion engine average speed (hereinafter, referred to as an "average engine speed") which is detected by the engine speed detecting means.

As mentioned above, the engine output control amounts other than the low speed side engine output control amount hardly contribute to the output control in the low speed side, particularly in the range related to hunting and engine stalling. Therefore, the third calculating means need not use the instantaneous engine speed for the calculation of the engine output control amounts other than the low speed side engine output control amount. Even if the average engine speed is used, there is no problem in accuracy.

It is preferable that the first calculating means and the second calculating means determine whether the engine speed is in or outside the low speed region based on the average engine speed.

Since the first calculating means and the second calculating means determine whether the engine speed is in or outside the low speed region based on the average engine speed, the calculation timing can be changed appropriately. Therefore, even in the internal combustion engine output control device which employs the arithmetic processing circuit having a low processing speed, hunting and engine stalling are prevented, and a margin can be provided in the arithmetic load that is processable even when the engine speed increases.

It is preferable that the engine output control amount be a fuel injection amount. More particularly, an example of the output control is the fuel injection amount.

It is preferable that the internal combustion engine be a diesel engine. More particularly, an example of the internal combustion engine is the diesel engine. In the diesel engine, since the engine output is directly controlled using the fuel injection amount, it is necessary to use the instantaneous engine speed with high responsiveness particularly during low rotation, and the above-mentioned effect can be obtained remarkably.

BRIEF DESCRIPTION OF THE DRAWINGS

The above and other objects, features, advantages, technical and industrial significances of this invention will be better understood by reading the following detailed description of preferred embodiments of the invention, when considered in connection with the accompanying drawings, in which

FIG. 1 is a view schematically showing a fuel injection system and a control system of a diesel to which a control method and device according to a first embodiment of the invention is applied;

FIG. 2 is a view schematically showing an engine speed sensor according to the first embodiment;

FIG. 3 is a flowchart of an engine speed detecting process performed by an ECU according to the first embodiment;

FIG. 4 is a flowchart of the engine speed detecting process performed by the ECU according to the first embodiment;

FIG. 5 is a flowchart of a fuel injection amount calculating process performed by the ECU according to the first embodiment;

FIG. 6 is a flowchart of a fuel injection amount calculating process A performed by the ECU according to the first embodiment;

FIG. 7 is a flowchart of a fuel injection amount calculating process B performed by the ECU according to the first embodiment;

FIG. 8 is a flowchart of a fuel injection amount calculating process C performed by the ECU according to the first embodiment;

FIG. 9 is a flowchart of a calculating process for fuel injection amounts eqgov2, eqgov3 for partial control performed by the ECU according to the first embodiment;

FIG. 10 is a graph showing governor pattern used in the first embodiment;

FIG. 11 is a timing chart showing an example of control in a low speed region according to the first embodiment;

FIG 12 is a timing chart showing an example of control in medium and high speed regions according to the first embodiment;

FIG. 13 is a flowchart showing a fuel injection amount calculating process according to a second embodiment;

FIG. 14 is a flowchart of a fuel injection amount calculating process D according to the second embodiment;

FIG. 15 is a flowchart of a fuel injection amount calculating process according to a third embodiment; and

FIG. 16 is a flowchart of a fuel injection amount calculating process according to a fourth embodiment.

DESCRIPTION OF THE EXEMPLARY EMBODIMENTS

In the following description and accompanying drawings, the present invention will be described in more detail in terms of exemplary embodiments.

[First embodiment]

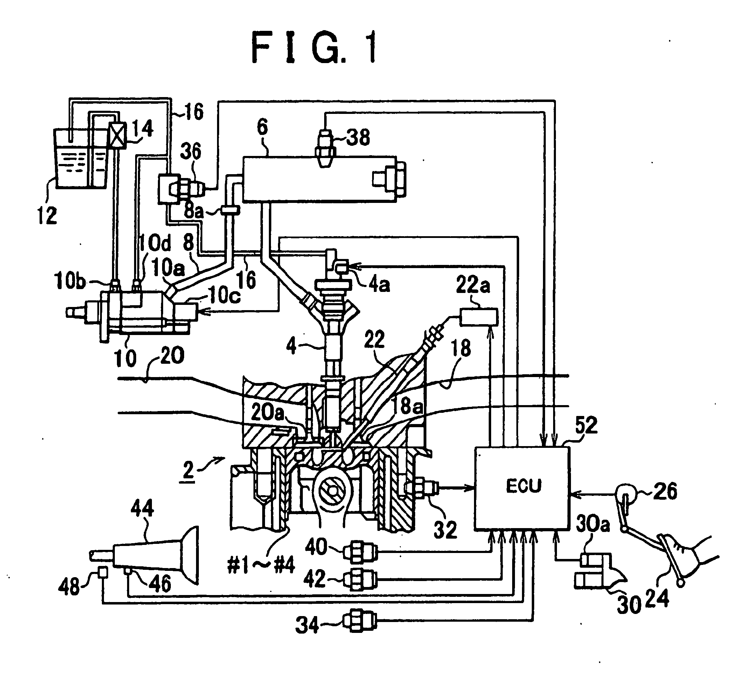

FIG. 1 is a view schematically showing a fuel injection system and a control system of a pressure accumulating type diesel engine (a common rail type diesel engine) 2 to which a first embodiment of the invention is applied. The pressure accumulating type diesel engine 2 is mounted on a vehicle as an engine for an automobile.

In the diesel engine 2, plural cylinders (only one cylinder is shown in the figure although there are four cylinders in the embodiment) #1, #2, #3, #4 are provided, and an injector 4 is provided in a combustion chamber of each of the cylinders #1, #2, #3, #4. Fuel injection from the injector 4 to each of the cylinders #1, #2, #3, #4 in the diesel engine 2 is controlled according to an ON/OFF state of an electromagnetic valve 4a for fuel injection control.

The injector 4 is connected to a common rail 6 which is a pressure accumulating pipe that is common to the cylinders. When the electromagnetic valve 4a for fuel injection control is open, the fuel in the common rail 6 is injected to each of the cylinders #1, #2, #3, #4 by the injector 4. In the common rail 6, a relatively high pressure corresponding to a fuel injection pressure is accumulated. In order to realize the accumulated pressure, the common rail 6 is connected to a discharge port 10a of a supply pump 10 through a supply pipe 8. A check valve 8a is provided on the supply pipe 8. The check valve 8a permits a fuel supply from the supply pump 10 to the common rail 6, and interrupts a backflow of the fuel from the common rail 6 to the supply pump 10.

The supply pump 10 is connected to a fuel tank 12 through an intake port 10b and a filter 14. The supply pump 10 takes in fuel from the fuel tank 12 through the filter 14. In addition, the supply pump 10 reciprocates a plunger using a cam (not shown) which runs in synchronization with rotation of the diesel engine 2, increases a fuel pressure to a required pressure, and supplies the high pressure fuel to the common rail 6.

In addition, a pressure control valve 10c is provided in the vicinity of the discharge port 10a of the supply pump 10. The pressure control valve 10c controls the fuel pressure discharged from the discharge port 10a to the common rail 6. When the pressure control valve 10c is opened, excessive fuel which is not discharged from the discharge port 10a is returned from a return port 10d provided in the supply pump 10 to the fuel tank 12 through a return pipe 16.

An intake passage 18 and an exhaust passage 20 are connected to the combustion chamber of each of the cylinders #1, #2, #3, #4 of the diesel engine 2. A throttle valve (not shown) is provided in the intake passage 18. When an opening of the throttle valve is adjusted according to an operation state of the diesel engine 2, a flow amount of the intake air which is introduced into the combustion chamber is adjusted.

A glow plug 22 is provided in the combustion chamber of each of the cylinders #1, #2, #3, #4 of the diesel engine 2. The glow plug 22 is a start assist device which becomes red-hot when being supplied with an electric current through a glow relay 22a immediately before the start of the diesel engine 2, and which promotes ignition and combustion when being sprayed with part of the fuel.

Various sensors and switches are provided in the diesel engine 2, and detect an operation state of the diesel engine 2. As shown in FIG. 1, an accelerator sensor 26 for detecting an accelerator opening ACCP is provided in the vicinity of an accelerator pedal 24. A starter 30 for starting the diesel engine 2 is provided in the diesel engine 2. A starter state detecting switch 30a for detecting an operation state of the starter is provided in the starter 30. A coolant temperature sensor 32 for detecting a coolant temperature (a coolant temperature THW) is provided in a cylinder block of the diesel engine 2. In addition, an oil temperature sensor 34 for detecting a temperature THO of engine oil is provided in an oil pan (not shown). A fuel temperature sensor 36 for detecting a fuel temperature THF is provided in the return pipe 16. A fuel pressure sensor 38 for detecting a fuel pressure in the common rail 6 is provided in the common rail 6.

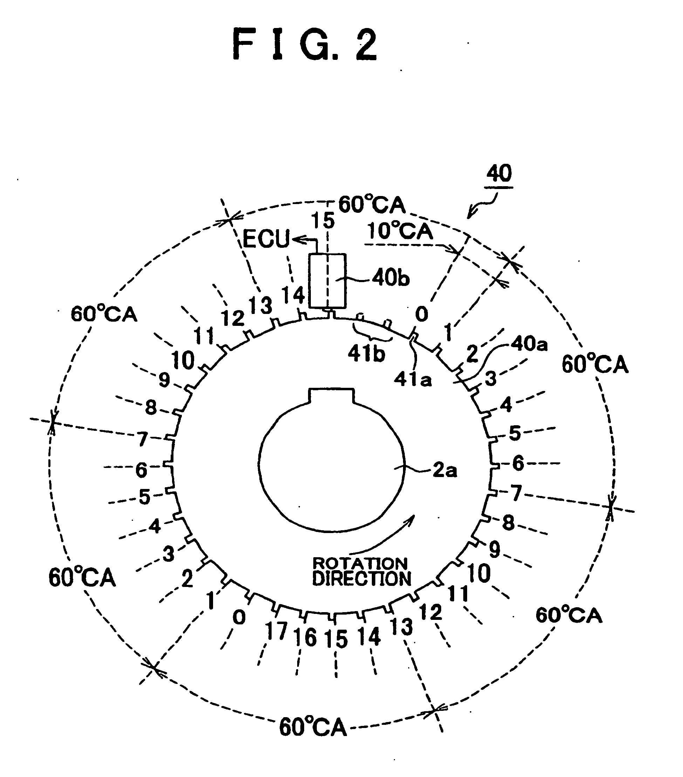

An engine speed sensor 40 for detecting a crank angle and an engine speed based on rotation of a crank shaft is provided in the crank shaft of the diesel engine 2. FIG. 2 shows a configuration of the engine speed sensor 40. The engine speed sensor 40 includes a pulser 40a and a pickup 40b. The pulser 40a is in a shape of a circular plate, is connected to a crank shaft 2a at a center portion thereof, and rotates in accordance with rotation of the crank shaft 2a. A pickup 40b is provided at a position facing a periphery of the pulser 40a.

Thirty-four protrusions 41a are formed on the periphery of the pulser 40a which faces the pickup 40b. The protrusions 41a are formed at positions which are obtained by dividing the periphery by thirty-six, and there are no protrusions at two consecutive positions, as shown by dashed lines. When the protrusions 41a pass in front of the pickup 40b in accordance with rotation of the pulser 40a, pulse signals are output from the pickup 40b, and the number of the pulse signals corresponds to the rotation. Accordingly, the rotation pulse signals are output at intervals of 10 °CA in a crank angle (CA) except for tooth missing portion 41b (the portion at which two protrusion are missing, as shown by the dashed lines). At the tooth missing portion 41b, the rotation pulse signals are output at an interval of 30 °CA. As shown in FIG. 2, the protrusions 41a are numbered sequentially "0" to "17" in the program.

Rotation of the crank shaft is transmitted to a camshaft (not shown) for opening/closing an intake valve 18a and an exhaust valve 20a through a timing belt or the like. The camshaft is set to rotate at a half rotational speed ratio of the crank shaft. A pulser (not shown) having one tooth is provided in the camshaft, and a pickup is provided in the vicinity of the pulser. A cylinder determination sensor 42 is thus formed. In the first embodiment, engine speeds (NEave, NEpk), and a crank angle CA are calculated according to the pulse signals output from the sensors 40, 42.

A shift position sensor 46 is provided in a transmission 44, and detects a shift state of the transmission 44. A vehicle speed sensor 48 for detecting a vehicle speed SPD based on a rotational speed of an output shaft is provided on an output shaft side of the transmission 44.

According to the first embodiment, an electronic control unit (ECU) 52 for managing various control of the diesel engine 2 is provided, and various processes for controlling the diesel engine 2 such as fuel injection amount control and glow power distribution control are performed by the ECU 52. The ECU 52 includes a central processing unit (CPU), read only memory (ROM) which stores various programs, maps and the like in advance, random access memory (RAM) which temporarily stores an arithmetic result and the like obtained by the CPU, and a backup RAM which stores the arithmetic result, the data stored in advance and the like. In addition, the ECU 52 is mainly provided with a microcomputer including a timer counter, an input interface, an output interface and the like. The accelerator sensor 26, the coolant temperature sensor 32, the oil temperature sensor 34, the fuel temperature sensor 36, the fuel pressure sensor 38 and the like are connected to the input interface of the ECU 52 through a buffer, a multiplexer, an A/D converter (not shown). The engine speed sensor 40, the cylinder determination sensor 42, the vehicle speed sensor 48 and the like are connected to the input interface of the ECU 52 through a waveform shaping circuit (not shown). An ignition switch (not shown), the starter state detecting switch 30a, the shift position sensor 46 and the like are connected to the input interface of the ECU 52 directly. Signals necessary for control are input in the ECU 52, and values thereof are read. The CPU reads the signals from the sensors and the switches through the input interface. The electromagnetic valve 4a, the pressure control valve 10c, the glow relay 22a and the like are connected to the output interface of the ECU 52 through a drive circuit. The CPU performs arithmetic computations for control based on the input values which are read through the input interface, and controls driving of the electromagnetic valve 4a, the pressure control valve 10c, the glow relay 22a through the output interface.

The ECU 52 performs fuel injection amount control process basically by angle interrupt process of the crank angle, and partly by time interrupt process. In the fuel injection amount control process, a governor pattern injection amount eqgov is calculated based on engine speeds NEave, NEpk, and an accelerator opening ACCP according to a governor pattern. Then, fuel is injected from the injector 4 based on a fuel injection amount which is obtained by making various corrections and restrictions to the governor pattern injection amount eqgov. In addition, the ECU 52 performs power distribution control for the glow plug 22.

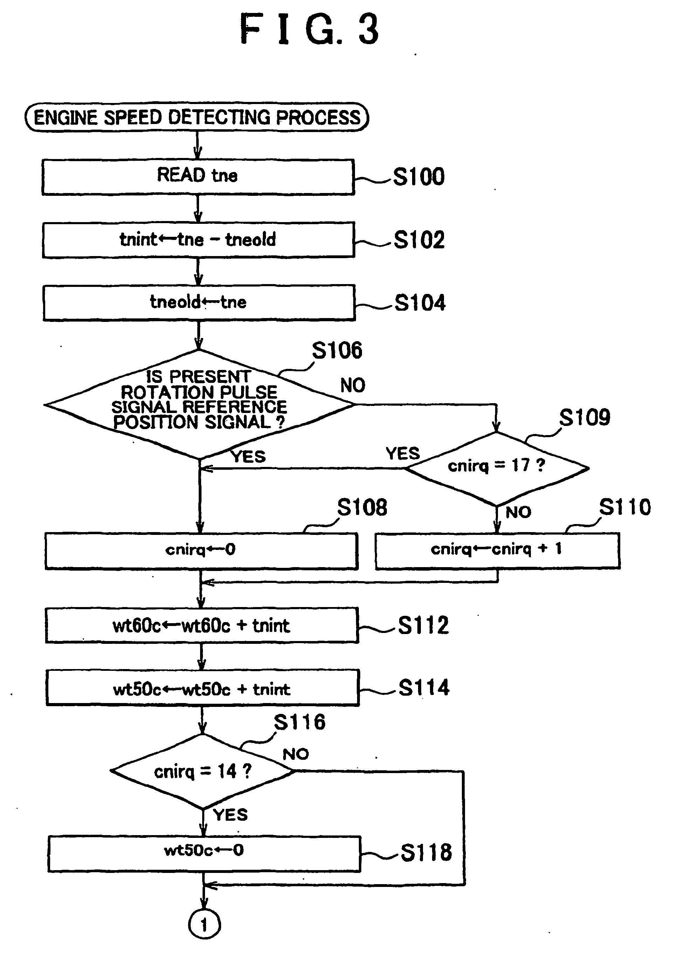

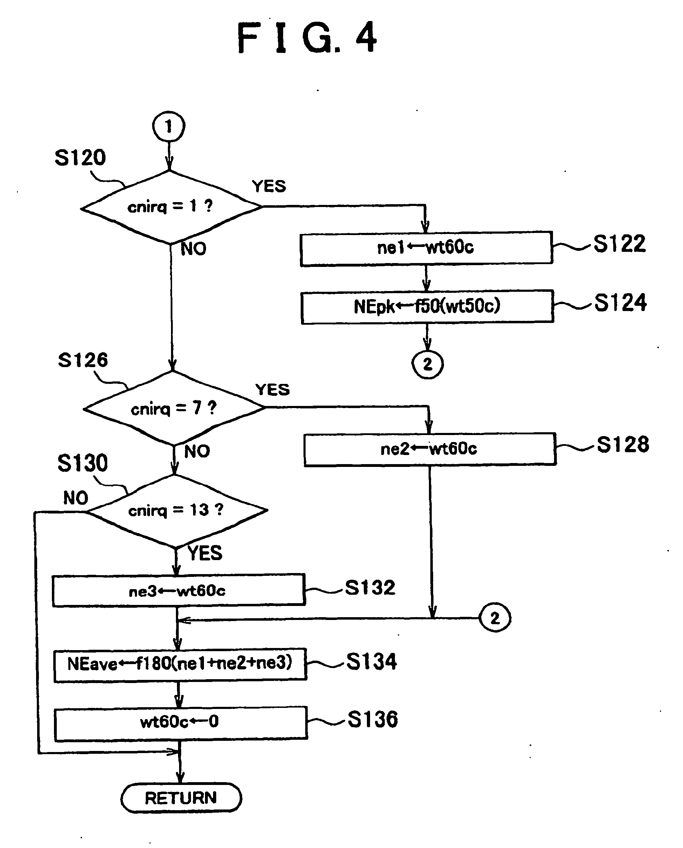

Next, among the control performed by the ECU 52, an engine speed detecting process and a fuel injection amount control process will be described. FIGS. 3 and 4 show the engine speed detecting process. In the engine speed detecting process, an average engine speed NEave (a rotation time of the average engine speed 180 ° CA) and a peak engine speed NEpk (a type of the instantaneous engine speed) are detected. The process is performed every time the rotation pulse signal is input from the engine speed sensor 40, that is, performed by interrupt at the angle interrupt process of the crank angle.

When the process is started, a present interrupt time tne is set by reading a value of a timer counter included in the ECU 52 (S 100). Next, a pulse interval tnint between the last rotation pulse signal and the present rotation pulse signal is calculated by subtracting a value of a last interrupt time tneold from a value of the present interrupt time tne, as shown by the equation 1 (S102).

**[equation 1]**

$$\text{tnint} \leftarrow \text{tne} - \text{tneold} \dots (1)$$

Then, the value of the present interrupt time tne is set to the last interrupt time tneold (S104).

Next, it is determined whether the present rotation pulse signal is a reference position signal (S 106). In this case, the reference position signal is a rotation pulse signal by the protrusion 41a numbered "0" which appears immediately after the tooth missing portion 41b shown in FIG. 2. The angle between the protrusion 41a numbered "0" and the protrusion 41a numbered "15", which is the protrusion immediately before the protrusion 41a numbered "0", is three times larger than the angle between the other protrusions 41a. In accordance with this, the pulse interval tnint becomes longer. Therefore, it is determined whether the pulse interval tnint obtained by the equation 1 is at least one-and-a-half times the pulse interval tnint obtained in the last control cycle. When the pulse interval tnint obtained by the equation 1 is at least one-and-a-half times the pulse interval tnint obtained in the last control cycle, it is determined that the present rotation pulse signal is the reference position signal. When the pulse interval tnint obtained by the equation 1 is shorter than one-and-a-half-times the pulse interval tnint obtained in the last control cycle, it is determined that the present pulse signal is not the reference position signal.

When it is determined that the present rotation pulse signal is the reference position signal ("YES" in S106), a counter cnirq which shows a pulse count number after the detection of the reference position signal is set to "0" (S108). Meanwhile, when it is determined that the present rotational pulse signal is not the reference position signal ("NO" in S106), it is determined whether the counter cnirq is "17" (S109). When it is determined that cnirq is not "17" ("NO" in S 109), the counter cnirq is incremented (S 110). Meanwhile, when it is determined that the cnirq is "17" ("YES" in S109), the counter cnirq is set to "0" (S108). Thus, the protrusions 41a are set to the sequence numbers as shown in FIG. 2.

When setting of the counter cnirq is completed in step S 108 or step S 110, the pulse interval tnint is added to 60° accumulated time wt60c, as shown by the equation 2 (S112).

**[equation 2]**

$$\text{wt60c} \leftarrow \text{wt60c} + \text{tnint} \dots (2)$$

In addition, the pulse interval tnint is added to 50° accumulated time wt50c, as shown by the equation. 3 (S114).

**[equation 3]**

$$\text{wt50c} \leftarrow \text{wt50c} + \text{tnint} \dots (3)$$

Next, it is determined whether the value of the counter cnirq is "14" (S 116). When it is determined that the counter cnirq is "14" ("YES" in S 116), the value of 50° accumulated time wt50c is set to "0" (S118).

When it is determined that the counter cnirq is not "14" ("NO" in S116), process for 50° accumulated time wt50c is not performed. Then, after performing step S 118, or after a negative determination is made in step S116, it is determined whether the counter cnirq is "1" (S120).

When it is determined that the counter cnirq is "1" ("YES" in S120), a first ne1 is set to the presently obtained value of 60° accumulated time wt60c (S122). The first rotational speed ne1 is shown as a time necessary for the crank shaft to rotate 60°CA (60°CA from the counter cnirq "13" to the counter cnirq "1").

Further, the presently obtained value of 50° accumulated time wt50c is converted to an engine speed (rpm), and the peak engine speed NEpk is set to the converted value (S124). The 50° accumulated time wt50c is a time necessary for the crank shaft to rotate 50° CA (50° CA from the counter cnirq "14" to the counter cnirq "1"). Therefore, the peak engine speed NEpk shows an instantaneous engine speed in the period in which the crank shaft rotates 50° CA from the counter cnirq "14" to the counter cnirq "1". In the range, the engine speed reaches the peak according to the output of the previous combustion stroke.

When it is determined that the counter cnirq is not "1" ("NO" in step S120), it is determined whether the counter cnirq is "7" (S126). When it is determined that the counter cnirq is "7" ("YES" in S126), the second rotational speed ne2 is set to the value of 60° accumulated time wt60c (S128). The second rotational speed ne2 is shown as a time necessary for the crank shaft to rotate 60° CA from the counter cnirq "1" to the counter cnirq "7". In this case, the peak engine speed NEpk is not set.

When it is determined that the counter cnirq is not "7" ("NO" in S126), it is determined whether the counter cnirq is " 13" (S 130). When it is determined that the counter cnirq is "13" ("YES" in S 130), the third rotational speed ne3 is set to the value of 60° accumulated time wt60c (S 132). The third rotational speed ne3 is shown as a time necessary for the crank shaft to rotate 60° CA (60° CA from the counter cnirq "7" to the counter cnirq "13"). In this case, the peak engine speed NEpk is not set.

When one of steps S124, S128 and S132 is completed, the average engine speed NEave is calculated by the equation 4 (S134).

[equation 4]

$$\text{NEave} \leftarrow \text{f180 (ne1 + ne2 + ne3)} \ldots (4)$$

The average engine speed NEave is an engine speed (rpm) obtained using the time calculated by accumulating pulse intervals tnint while the crankshaft rotates 180°CA up to the present, and shows the average speed in the 180° CA rotation.

Then, 60° accumulated time wt60c is set to "0" (S136), afterwhich the process temporarily ends. When the counter cnirq is not "13" ("NO" in S130), the process temporarily ends.

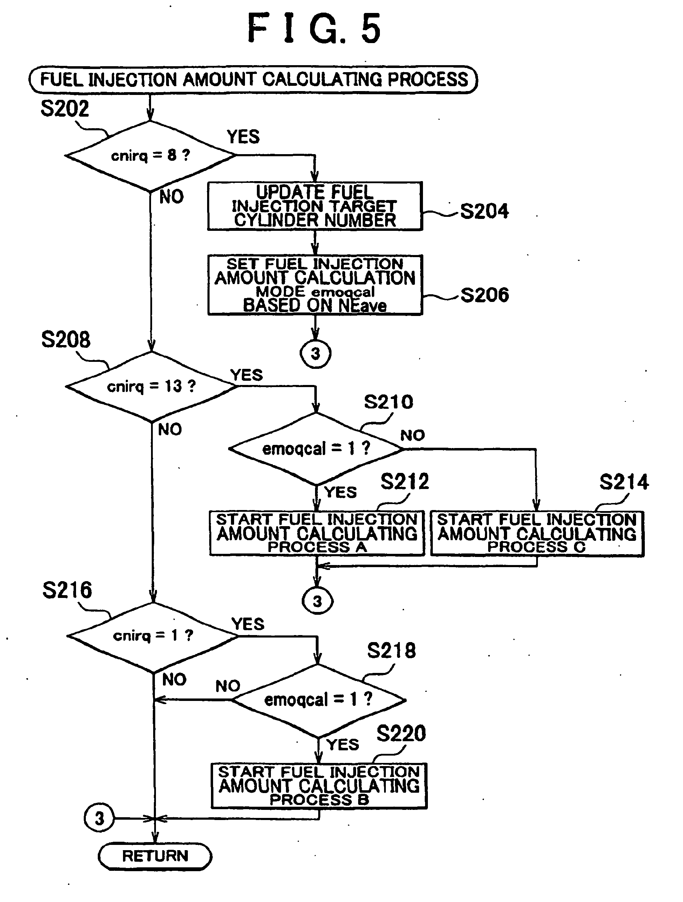

The arithmetic computation of the fuel injection amount is performed based on the average engine speed NEave and the peak engine speed NEpk which are obtained in the above-mentioned process. The fuel injection amount calculating process is shown in FIGS. 5 to 9.

The fuel injection amount calculating process in FIG. 5 is performed after the engine speed detecting process (FIGS. 3 and 4) every time the rotation pulse signal is input, that is, at the angle interrupt process of the crank angle.

When the process is started, it is determined whether the value of the counter cnirq is "8" (S202). When it is determined that the cnirq is "8" ("YES" in S202), the injection target cylinder number is then updated (S204). The diesel engine 2 according to the embodiment is a four-cylinder engine in which a combustion stroke is repeatedly performed in an order of #1 → #3 → #4 → #2. Accordingly, the injection target cylinder number is updated in this order. In the embodiment, when the cnirq becomes "8" immediately after the pulse signal is output from the cylinder determination sensor 42, the cylinder #1 is set as the injection target cylinder in step S204.

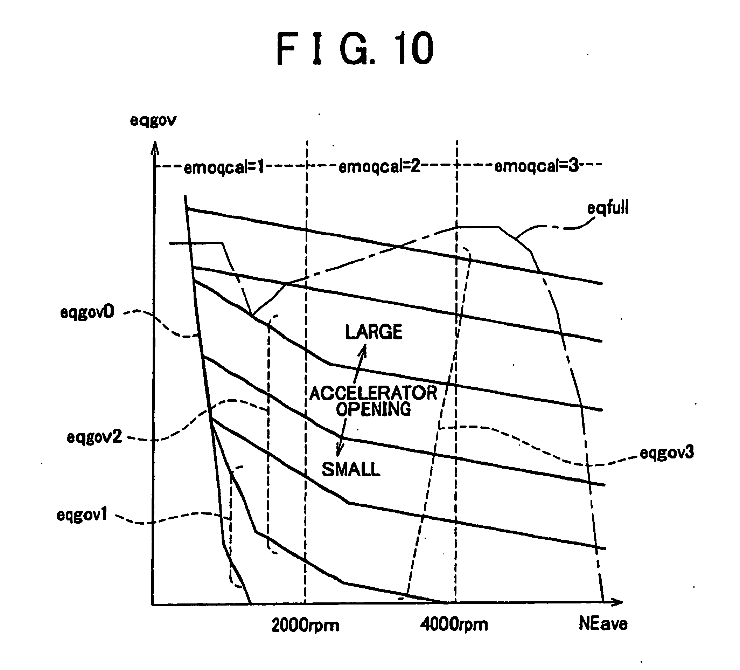

Next, the injection amount calculation mode emoqcal is set based on the average engine speed NEave (S206). In this case, as shown in FIG. 10, the injection amount calculation mode emoqcal is set to "1" in the low speed region (NEave < 2000rpm), the injection amount calculation mode emoqcal is set to "2" in the medium speed region (2000rpm ≤ NEave < 4000rpm), and the injection amount calculation mode emoqcal is set to "3" in the high speed region (4000rpm ≤ NEave). The average engine speeds NEave of 2000rpm and 4000rpm which are used as the boundaries of the injection amount calculation modes emoqcal are dependent on the processing speed of the CPU used in the ECU 52. When the emoqcal is "1", the boundary between the low speed region and the medium speed region is set such that the engine speed is the average engine speed NEave in which there is a margin to use the detected peak engine speed NEpk for the fuel injection amount calculation at the next fuel injection timing (corresponding to the engine output control timing). When the emoqcal is "2", it is difficult to use the detected peak engine speed NEpk for the fuel injection amount calculation at next fuel injection timing. However, the boundary between the medium speed region and the high speed region is set such that the engine speed is the average engine speed NEave in which there is a margin to perform detailed fuel injection amount corrections such as the correction between the cylinders.

When the fuel injection amount calculation mode emoqcal is set in step S206, the process temporarily ends. Meanwhile, when the cnirq is not "8" ("NO" in S202), it is determined whether the cnirq is "13" (5208). When it is determined that cnirq is "13" ("YES" in S208), it is determined whether the fuel injection amount calculation mode emoqcal is "1" (S210).

When it is determined that the emoqcal is "1" ("YES" in S210), the fuel injection amount calculating process A is started (S212), afterwhich the process temporarily ends.

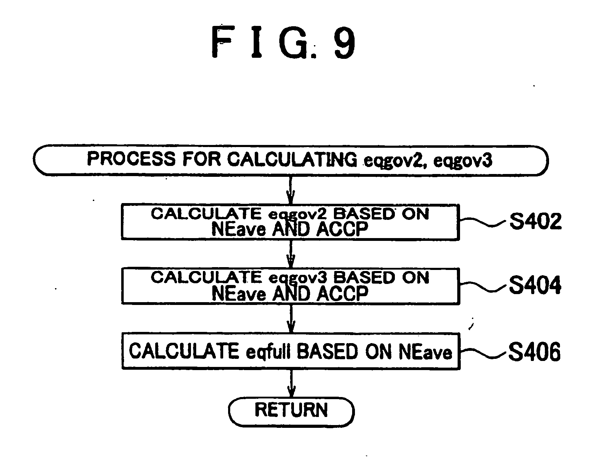

The fuel injection amount calculating process A is as shown in FIG. 6. The governor pattern fuel injection amount eqgov is calculated based on the fuel injection amounts eqgov0, eqgov 1 which have already been calculated in the last control cycles and the fuel injection amounts eqgov2, eqgov3 which have been calculated at the time interrupt process in FIG. 9 that will be described later. More particularly, the governor pattern fuel injection amount eqgov is calculated by the equation 5.

**[00112]** [equation 5]

$$eqgov \leftarrow MAX (eqgov0, eqgov1,$$

$$MAX (eqgov2, eqgov3) + ISC \text{ anticipated correction amount})$$

$$... (5)$$

In this case, the two MAXes ( ) show operators which extract the greatest values among the numeric values in ( ). Namely, the first MAX ( ) extracts the greatest value among the three values, which are [eqgov0], [eqgov1] and [MAX (eqgov2, eqgov3) + ISC anticipated correction amount] and set the extracted greatest value as the governor pattern fuel injection amount eqgov. The second MAX ( ) extracts the greater value of the two values, that are [eqgov2] and [eqgov3].

The ISC anticipated value includes a correction amount of the fuel injection amount corresponding to a load when a load such as an air conditioner load is generated, and a learning value which is obtained during idle speed control (ISC).

The eqgov0 is the fuel injection amount for engine stalling prevention, the eqgov 1 is the fuel injection amount for idle speed control (ISC), and the eqgov2 and the eqgov3 are fuel injection amounts for partial control. The relationship among them is as shown by the governor pattern in FIG. 10. In the embodiment, the governor pattern fuel injection amount eqgov is set by using the fuel injection amount eqgov 1 for ISC not only when the accelerator opening ACCP is 0%, but also in the low speed/small accelerator opening state.

Various corrections and restriction calculation are performed for each cylinder based on the thereby calculated governor pattern fuel injection amount eqgov, and the final fuel injection amount eqfin is calculated (S304). Then, the pilot fuel injection amount is calculated based on the final fuel injection amount eqfin (S306). Then, the fuel injection amount calculating process A ends, and is not performed until being set to start again in step S212 in FIG. 5.

When the fuel injection amount calculation mode emoqcal is "1" (low speed region), only the pilot fuel injection amount is calculated when the cnirq is "13". The pilot fuel injection is performed in the thereby calculated pilot fuel injection amount before the fuel injection is performed in the main fuel injection amount, which will be described later,

Hereafter, the processes for calculating the fuel injection amounts eqgov2, eqgov3 for partial control (FIG. 9) will be described. The processes are repeatedly performed at the time interrupt process and periodically, at intervals of 8ms in this case.

When the process is started, the fuel injection amount eqgov2 for the first partial control is calculated based on the average engine speed NEave and the accelerator opening ACCP (S402). The calculation is performed by the equation 6.

[equation 6]

$$eqgov2 \leftarrow C1 - NEave \times C2 + ACCP \times C3 ...(6)$$

In this case, C1, C2, C3 are constant numbers. The constant numbers C1, C2, C3 are set such that the fuel injection amount eqgov2 for the first partial control actually appears in the governor pattern fuel injection amount eqgov in the small accelerator opening/low speed region in the fuel injection amount calculation modes emoqcal 1, emoqcal 2, by the equation 5, as shown by the governor pattern in FIG. 10.

Then, the fuel injection amount eqgov3 for the second partial control is calculated based on the average engine speed NEave and the accelerator opening ACCP (S404). The calculation is performed by the equation 7.

[equation 7]

$$eqgov3 \leftarrow D1 - NEave \times D2 + ACCP \times D3 ... (7)$$

In this case, D1, D2, D3 are constant numbers. The constant numbers D1, D2, D3 are set such that the fuel injection amount eqgov3 for the second partial control actually appears in the governor pattern fuel injection amount eqgov in the large accelerator opening/high speed region in the fuel injection amount calculation modes emoqcal 1, enoqcal 2,emoqcal 3 by the equation 5, as shown by the governor pattern in FIG. 10.

Then, the maximum fuel injection amount eqfull is set based on the average engine speed NEave (S406). For example, the maximum fuel injection amount eqfull is set based on the average engine speed NEave according to a map, as shown by a dashed line in FIG. 10.

Then, the processes for calculating the fuel injection amounts eqgov2, eqgov3 for partial control (FIG. 9) temporarily ends. The above-mentioned processes are repeatedly performed at intervals of 8ms. However, the priority of interruption thereof is set to be lower than those of the crank angle interruption processes such as the engine speed detecting process (FIGS. 3 and 4) and the fuel injection amount calculating process (FIGS. 5 to 8).

In the fuel injection amount calculating process (FIG. 5), when the counter cnirq is "1" ("YES" in S216), it is determined whether the emoqcal is "1" (S 218). When it is determined that the emoqcal is not "1" ("NO" in step S218), the process temporarily ends. Meanwhile, when it is determined the emoqcal is "1" ("YES" in S218), the fuel injection amount calculating process B is started (S220), afterwhich the process temporarily ends.

The fuel injection amount calculating process B is as shown in FIG. 7. The fuel injection amount eqgov0 for engine stalling prevention is calculated based on the peak engine speed NEpk (S312). The calculation is performed by the equation 8.

[equation 8]

$$eqgov0 \leftarrow A1 - NEpk \times A2 + ISC\ correction\ term \dots (8)$$

In this case, A1, A2 are constant numbers. The ISC correction term corresponds to the correction term which is calculated during ISC, and includes the correction amount corresponding to the loads such as the air conditioner load, and the learning value during ISC.

The fuel injection amount calculating process B is performed when the cnirq is "1", and the fuel injection amount eqgov0 for engine stalling prevention is calculated using the peak engine speed NEpk which is calculated in step S 124 in the last engine speed detecting process (FIGS. 3 and 4).

The constant number A1, A2 are set such that the thereby calculated fuel injection amount eqgov0 for engine stalling prevention actually appears in the govenor pattern fuel injection amount eqgov in the low speed side in the region where fuel injection amount calculation mode emoqcal is "1" by the equation 5, as shown by the governor pattern in FIG. 1. Thus, the fuel injection amount eqgov0 for engine stalling prevention functions so as to guard a decrease in the engine speed due to abrupt occurrence of the load during ISC.

Next, the fuel injection amount eqgov 1 for ISC is calculated based on the peak engine speed NEpk and the accelerator opening ACCP (S314). The calculation is performed by the equation 9.

[equation 9]

$$eqgov1$$
$$\leftarrow B1 - NEpk \times B2 + ACCP \times B3 + ISC\ correction\ term \dots (9)$$

In this case, B1, B2, B3 are constant numbers, and the ISC correction term is calculated for ISC, as described above. The fuel injection amount eqgov 1 for ISC is calculated using the peak engine speed NEpk which is calculated in step S124 in the last engine speed detecting process (FIGS. 3 and 4), as in the case of the fuel injection amount eqgov0 for engine stalling prevention.

B1, B2, B3 are set such that the fuel injection amount eqgov 1 for ISC actually appears in the governor fuel injection amount eqgov in the small accelerator opening/low speed region in the region where the fuel injection calculation mode emoqcal is "1" by the equation 5, as shown by the governor pattern in FIG. 10.

Next, the governor pattern eqgov is calculated based on the fuel injection amounts eqgov0, eqgov1, eqgov2, eqgov3 which are currently obtained, by the equation 5 (S316).

The final fuel injection amount eqfin is calculated as in the case of step S304 (S318), and the second final fuel injection amount eqfinc is calculated by making corrections related to drivability such as correction between cylinders to the final fuel injection amount eqfin (S320).

Then, the main fuel injection amount is calculated based on the second final fuel injection amount eqfinc and the pilot fuel injection amount which is calculated in the fuel injection amount calculating process A (FIG. 6) (S322).

The fuel injection amount calculating process B (FIG. 7) thus ends, and is not performed until being set to start in step S220 in FIG. 5. When the fuel injection amount calculation mode emoqcal is "1" (low speed region), only the main fuel injection amount is calculated when the cnirq is "1". Then, the main injection is performed in the main fuel injection amount which is thus calculated after the pilot fuel injection.

In FIG. 5, in the case where the cnirq is "13" ("YES" in S208), when the fuel injection amount calculation mode emoqcal is "2" (medium speed region) or "3" (high speed region) ("NO" in S210), the fuel injection amount calculating process C is performed (S214), afterwhich the process temporarily ends.

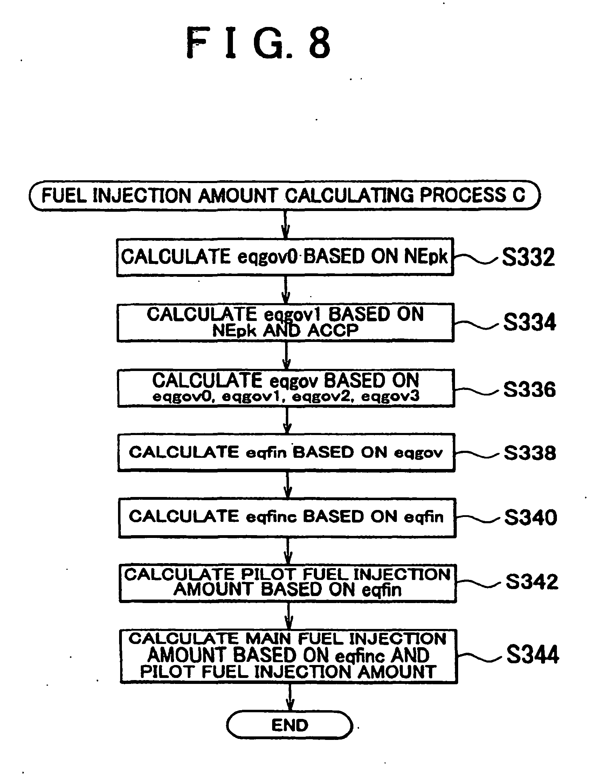

The fuel injection amount calculating process C is as shown in FIG. 8. First, the fuel injection amount eqgov0 for engine stalling prevention is calculated based on the peak engine speed NEpk (S332). The calculation is performed by the equation 8 as in the case of step S312 in the fuel injection amount calculating process B (FIG. 7).

The fuel injection amount calculating process C is performed when the cnirq is "13", and detection of the peak engine speed NEpk (S124) is not performed in the last engine speed detecting process (FIGS. 3 and 4). Accordingly, the peak engine speed NEpk corresponding to the output in the last combustion stroke is not actually used, and the peak engine speed NEpk corresponding to the output in the combustion stroke before last is used.

The fuel injection amount eqgov1 for ISC is calculated based on the peak engine speed NEpk and the accelerator opening ACCP (S334). The calculation is performed by the equation 9 as in the case of step S314 in the fuel injection amount calculating process B (FIG. 7). As in the case of the fuel injection amount eqgov0 for engine stalling prevention, the peak engine speed NEpk corresponding to the output in the last combustion stroke is not used, and the peak engine speed NEpk corresponding to the output in the combustion stroke before last is used.

The governor pattern fuel injection amount eqgov is calculated by the equation 5 based on the fuel injection amounts eqgov0, eqgov1, eqgov2, eqgov3 which are currently obtained (S336).

Then, the final fuel injection amount eqfin is calculated as in the case of step S304 (S338), and the second final fuel injection amount eqfinc is calculated based on the final fuel injection amount eqfin as in the case of step S320 (S340).

Then, the pilot fuel injection amount is calculated based on the final fuel injection amount eqfin as in the case of step S306 (S342), and the main fuel injection amount is calculated based on the pilot fuel injection amount and the second final fuel injection amount eqfinc as in the case of step S322 (S344).

The fuel injection amount calculating process C (FIG. 8) thus ends, and is not performed until being set to start again in step S214 in FIG. 5. When the fuel injection amount calculation mode emoqcal is "2" or "3" (medium speed region), the pilot fuel injection amount and the main fuel injection amount are calculated when the cnirq is "13". Each of the fuel injection is then performed at the following fuel injection timing based on the calculated pilot fuel injection amount and the main fuel injection amount.

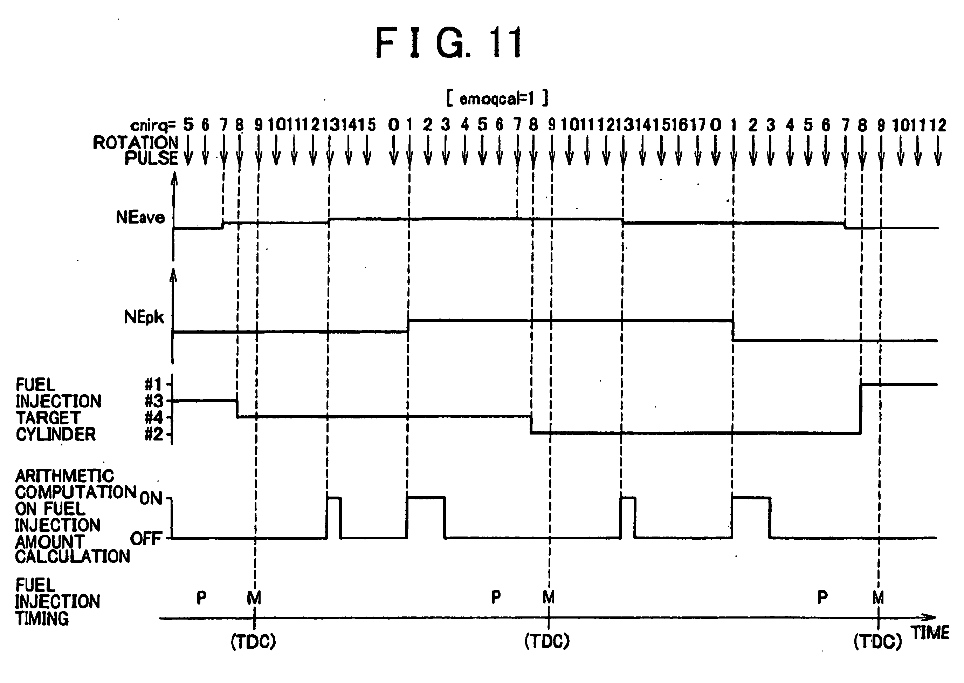

By the above-mentioned process, when NEave is lower than 2000rpm (when the fuel injection amount calculation mode emoqcal is "1"), the pilot fuel injection amount and the main fuel injection are calculated, as shown in the timing chart in FIG. 11.

Namely, when the counter cnirq is "13", the governor pattern fuel injection amount eqgov is calculated using the fuel injection amount eqgov0 for engine stalling prevention and the fuel injection amount eqgov 1 for ISC which have already been calculated, by the fuel injection amount calculating process A (FIG. 6). The pilot fuel injection amount is then calculated based on the governor pattern fuel injection amount eqgov.

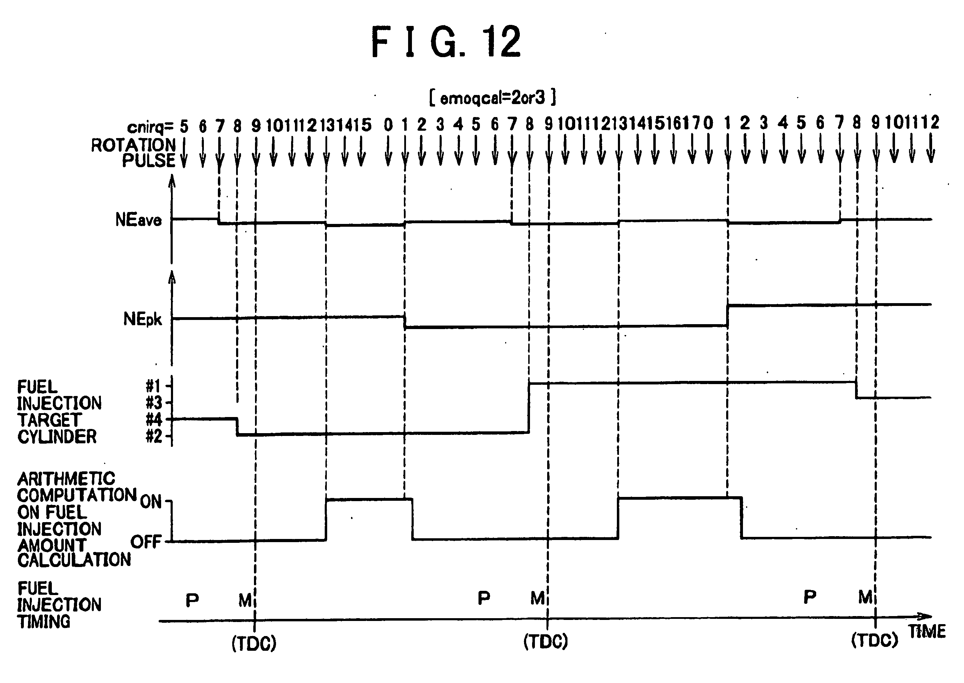

When the counter cnirq is "1", the fuel injection amount eqgov0 for engine stalling prevention and the fuel injection amount eqgov1 for ISC are calculated using the peak engine speed NEpk which is detected last, by the fuel injection amount calculating process B (FIG. 7). Subsequent to this, the governor pattern fuel injection amount eqgov is calculated based on the fuel injection amounts eqgov0, eqgov1, eqgov2, eqgov3. The main fuel injection amount is calculated based on this governor pattern fuel injection amount eqgov. The arithmetic computation process of the main fuel injection amount can be performed by the next fuel injection timing with a margin. In FIG. 11, "P" denotes the pilot fuel injection timing, and "M" denotes the main fuel injection timing. This is the same in FIG. 12.

During low speed time such as idling time, the governor pattern fuel injection amount eqgov is set by using the fuel injection amounts eqgov0 and eqgov1 by the fuel injection amount calculating process B (FIG. 7). Accordingly, the last peak engine speed NEpk is reflected on the main fuel injection amount based on the governor pattern fuel injection amount eqgov. Therefore, the output torque control with high responsiveness can be performed, and stable idle speed can be realized.

When the accelerator opening ACCP increases, the governor pattern fuel injection amount eqgov is set by using the fuel injection amounts eqgov2 and eqgov3 for partial control. However, in this case, the fuel injection amount itself is large. Accordingly, there is no problem in the engine speed stability even if the average engine speed NEave is used instead of using the peak engine speed NEpk, unlike the small fuel injection time.

In the case where NEave is equal to or smaller than 2000 rpm (when the fuel injection amount calculation mode qmoqcal is "2" or "3"), as shown in the timing chart in FIG. 12, by performing the fuel injection amount calculating process C in FIG. 8 when the counter cnirq is "13", the fuel injection amounts eqgov0, eqgov1 are calculated based on the value of the peak engine speed NEpk reflecting the output in the last combustion stroke before last. The governor pattern eqgov is then calculated based on the fuel injection amounts eqgov0, eqgov1, eqgov2, eqgov3. The pilot fuel injection amount and the main fuel injection amount are calculated based on the governor pattern fuel injection amount eqgov.

The arithmetic processing of the pilot fuel injection amount and the main fuel injection amount can be performed by the next fuel injection timing with a margin.

In the medium and high speed regions, the governor pattern fuel injection amount eqgov is set by using the fuel injection amounts eqgov2 and eqgov3 for partial control. Accordingly, there is no problem even if the fuel injection amounts eqgov0, eqgov 1 are calculated based on the peak engine speed NEpk reflecting the torque in the combustion stroke before last.

In addition, since the engine speed is in the medium and high speed regions, there is no problem in the engine speed stability even if the governor pattern fuel injection amount eqgov is set by using the fuel injection amounts eqgov2 and eqgov3 for partial control which use the average engine speed NEave.

In the above-mentioned configuration, the engine speed detecting process (FIGS. 3 and 4) corresponds to the process performed by the engine speed detecting means, the fuel injection amount calculating process (FIGS. 5 to 8) correspond to the process performed by the first calculating means and the second calculating means, and the process for calculating the fuel injection amounts eqgov1 and eqgov3 for partial control (FIG. 9) correspond to the process performed by the third calculating means. The calculation timing when the counter cnirq is "1" corresponds to the first calculation timing, and the calculation timing when the counter cnirq is "13" corresponds to the second calculation timing. In addition, steps S316, S336 in FIGS. 7 and 8 correspond to the processes performed by the engine output control amount calculating means, and steps S318, S322, S338, S340, S344 correspond to the processes performed by the output control means.

According to the first embodiment, the following effects can be obtained

(a) When the average engine speed NEave is in the low speed region (when the emoqcal is "1"), the first calculating timing (in this case, cnirq is "1") is provided in the period after the detection of the peak engine speed NEpk by the fuel injection timing (in this case, cnirq is from "6" to "9"). Then, the fuel injection amounts eqgov0, eqgov1 which are the low speed side engine output control amounts are calculated at the first calculation timing. Since the engine speed is in the low rotation region, the fuel injection amounts eqgov0, eqgov1 are immediately reflected on the governor pattern fuel injection amount eqgov. Accordingly, the peak engine speed NEpk is reflected on the output control with high responsiveness, and hunting and engine stalling can be prevented.

When the average engine speed NEave is outside the low speed region (when the emoqcal is "2" or "3"), the calculation timing of the fuel injection amounts eqgov0, eqgov1 is independent of the first calculating timing (cnirq is "1"), and is calculated at the second calculation timing (cnirq is "13"). Since the engine speed is in the medium and high speed regions, the fuel injection amounts eqgov0, eqgov1 are not reflected on the governor pattern fuel injection amount eqgov, and is used only as a value for calculation. The fuel injection amounts eqgov2, eqgov3 for partial control are actually reflected on the governor pattern fuel injection amount eqgov.

Hunting and engine stalling related to responsiveness are affected by the accuracy of the fuel injection amounts eqgov0, eqgov1 used in the low speed region. However, as mentioned above, the fuel injection amounts eqgov2, eqgov3 for partial control are used in the medium and high speed regions. Accordingly, there is no problem even if the fuel injection amounts eqgov0, eqgov I are calculated at the second calculation timing (cnirq is "13").

In the medium and high speed regions, the fuel injection amounts eqgov0, eqgov1 are calculated at the second calculation timing (cnirq is "13") which is prior to the first calculation timing (cnirq is "1"). Therefore, a margin is provided for the arithmetic processing of the fuel injection amounts eqgov0, eqgov1. Further, a margin is provided in another arithmetic processing which needs to be calculated at the first calculation timing (cnirq is "1").

Accordingly, even in the ECU 52 which employs the CPU having a low processing speed, hunting and engine stalling are prevented, and a margin can be provided for the arithmetic load which is processable even when the engine speed increases.

Further, when the CPU having a low processing speed is high is used from the beginning, as mentioned above, a margin can be provided for the processable arithmetic load. Accordingly it is possible to also perform another control such as shifting control of the transmission 44, which enables reduction of the number of the control devices.

(b) The fuel injection amounts eqgov2, eqgov3 for partial control are repeatedly calculated at the time interrupt process, independently of the average engine speed NEave. Thus, the fuel injection amounts eqgov2, eqgov3 for partial control are independent of the first calculation timing. Accordingly, the arithmetic load in the first calculation timing is not increased, and a margin can be further provided in another arithmetic processing performed at the first calculation timing.

The fuel injection amounts eqgov2, eqgov3 for partial control do not contribute to the output control in the low speed side, particularly in the range related to hunting and engine stalling. Therefore, there is no problem in accuracy even if the fuel injection amounts eqgov2, eqgov3 for partial control are calculated at the time interrupt process instead of being calculated at the first calculation timing. Further, there is no problem in accuracy even if the fuel injection amounts eqgov2, eqgov3 for partial control are calculated based on the average engine speed NEave.

(c) As shown by the governor pattern in FIG. 10, when the engine speed is in the medium and high speed regions (when the emoqcal is "2" or "3"), the fuel injection amounts eqgov0, eqgov1 are not used for the actual fuel injection amount calculation. The fuel injection amounts eqgov2, eqgov3 for partial control which are calculated at the time interrupt process are used. Accordingly, a step does not occur in the governor pattern fuel injection amount eqgov even if the calculation timing of the fuel injection amounts eqgov0, eqgov1 is changed from the first calculation timing to the second calculation timing, and the state is realized in which not the last peak engine speed NEpk but the peak engine speed NEpk before last is used for the calculation of the fuel injection amounts eqgov0, eqgov1. Therefore, occurrence of a step in the engine output can be prevented.

(d) As shown by the equation 5, the fuel injection amounts eqgov2, eqgov3 for partial control which are mainly used in the medium and high speed regions are corrected using the ISC anticipated correction amount. Then, the governor pattern fuel injection amount eqgov is set by using the fuel injection amounts eqgov2 and eqgov3 for partial control.

The ISC anticipated correction amount includes a learning value when the fuel injection amount eqgov1 for ISC is calculated by the equation 9 in the low speed region. In the low speed region, since the fuel injection amount eqgov1 for ISC is calculated with high responsiveness and the output control is performed, the learning value during ISC is calculated with high accuracy. Therefore, by correcting the fuel injection amounts eqgov2, eqgov3 for partial control based on such highly accurate correction amounts, the output control can be performed more accurately in the medium and high speed regions.

[Second embodiment]

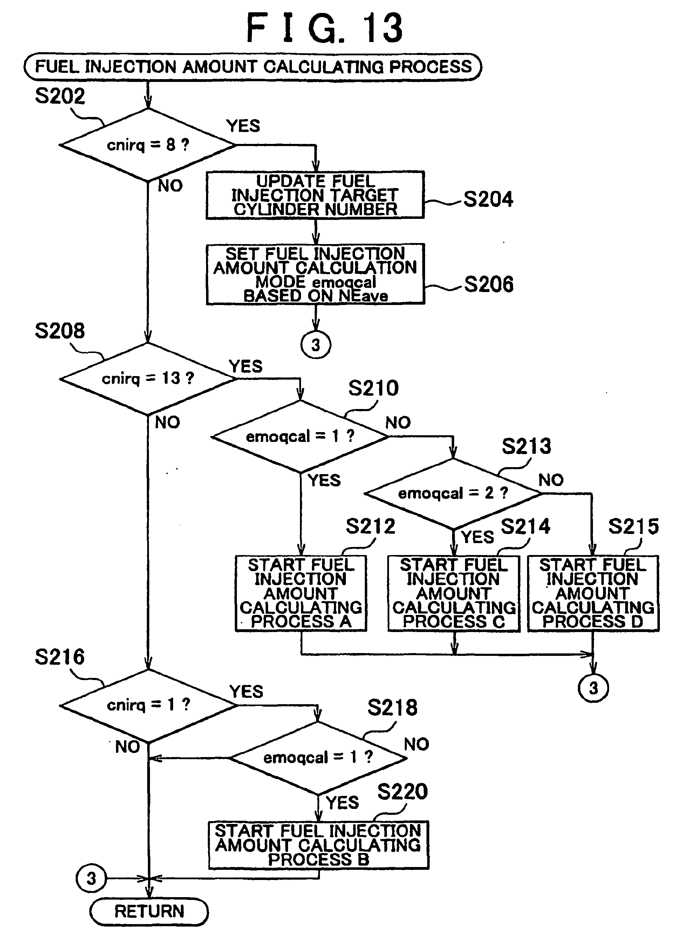

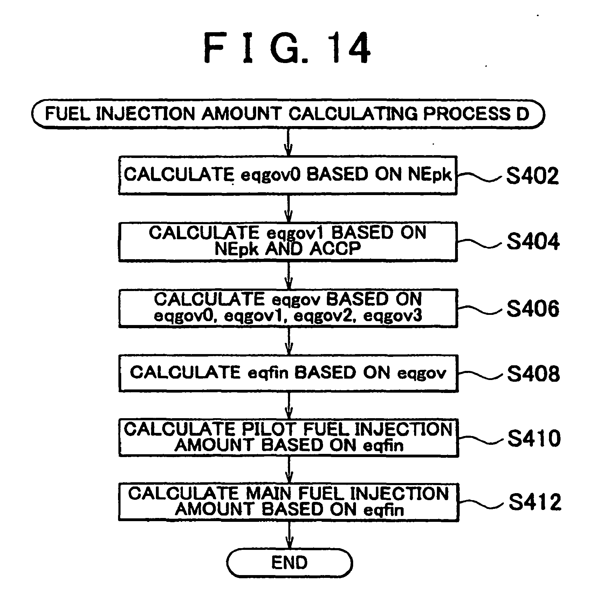

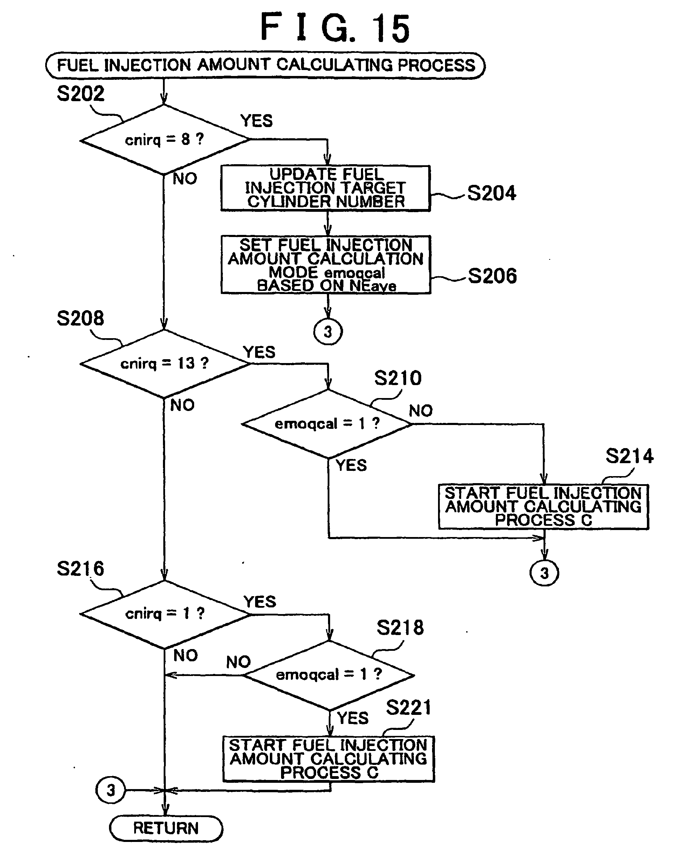

In the embodiment,the fuel injection amount calculating process in FIG. 13 is performed instead of the fuel injection amount calculating process in FIG. 5. In the embodiment, the fuel injection amount calculating process D shown in FIG. 14 is performed by the process which is newly provided in FIG. 15.

In FIG. 13, when the counter cnirq is "13" ("YES" in S208), and the fuel injection calculation mode emoqcal is not "1" ("NO" in S210), it is determined whether the emoqcal is "2" (S213). When it is determined that the emoqcal is "2" ("YES" in S213), the above-mentioned fuel injection amount calculating process C is performed. Meanwhile, when it is determined that the emoqcal is "3" ("NO" in S123), the fuel injection amount calculating process D in FIG. 14 is performed (S215). The other configurations are the same as those of the first embodiment.

The fuel injection amount calculating process D in FIG. 14 will be described. When the process is started, the fuel injection amount eqgov0 for engine stalling prevention is calculated based on the peak engine speed NEpk (S402), and the fuel injection amount eqgov1 for ISC is calculated based on the peak engine speed NEpk and the accelerator opening ACCP (S404). Since the calculation is performed when the counter cnirq is "13", as the peak engine speed NEpk used in this case, the peak engine speed NEpk reflecting the output of the last combustion stroke is not used. The peak engine speed NEpk reflecting the output of the combustion stroke before last is used.

The governor pattern fuel injection amount eqgov is calculated based on the fuel injection amounts eqgov0, eqgov1, eqgov2, eqgov3 which are currently obtained, by the equation 5 (S406). The final fuel injection amount eqfin is calculated based on the governor pattern fuel injection amount eqgov (S408). Then, the pilot fuel injection amount is calculated based on the final fuel injection amount eqfin (S410).

The series of processes in steps S402 to S410 are the same as those in steps S332 to S338 and S342 of the fuel injection amount calculating process C in FIG. 8. The difference between steps S402 to S410, and steps A332 to S338 and S342 is that the main fuel injection amount is calculated using the final fuel injection amount eqfin in step S412. When the emoqcal is "3", the engine speed is in the high speed region. Accordingly, even in the case where the calculation is started when the cqirq is "13", if the main fuel injection amount is calculated in the same process as the fuel injection amount calculating process C in FIG. 8, the calculation may not end by the next fuel injection timing. Therefore, the second final fuel injection timing eqfinc is not calculated based on the final fuel injection amount eqfin, and the main fuel injection amount is calculated based on the final fuel injection amount eqfin. In this case, the engine speed is in the high speed region. Accordingly, there is no problem in drivability even if correction between cylinders is omitted, unlike the medium speed region.

According to the second embodiment, the following effects can be obtained.

(a) Effects (a), (b), (c), and (d) according to the first embodiment can be obtained. Particularly in the high speed region, the fuel injection amount calculating process D in FIG. 14 is performed, and the main fuel injection amount is calculated based on the final fuel injection amount eqfin. Accordingly, without using a high speed CPU the control timing of the fuel injection amount does not deviate even when the diesel engine 2 is running at high speed.

[Third embodiment]

According to the embodiment, the fuel injection amount calculating process in FIG. 15 is performed instead of the fuel injection amount calculating process in FIG. 5. In FIG. 15, in the case where the cnirq is "13" ("YES" in S208), when the emoqcal is "1" ("YES" in S210), the fuel injection amount calculating process A in FIG. 6 is not performed, and the process temporarily ends. Meanwhile, in the case where the cnirq is "1" ("YES" in S216), when the emoqcal is "1" ("YES" in S218), the fuel injection amount calculating process C in FIG. 8 is performed (S221). Therefore, the fuel injection amount calculating process A in FIG. 6 and the fuel injection amount calculating process B in FIG. 7 are not performed.

When the engine speed is in the low speed region, the CPU included in the ECU 52 is in the calculation processing speed at which the arithmetic computations of the fuel injection amount calculating process C in FIG. 8 can be completed by the next fuel injection timing when the cnirq is "1". The other configurations are the same as those of the first embodiment.

According to the embodiment, the pilot fuel injection amount and the main fuel injection amount calculated in the fuel injection amount calculating process C in FIG. 8 are calculated when the cnirq is "1" in the low speed region, and are calculated when the cnirq is "13" in the medium and high speed regions. In the low speed region, the newest peak engine speed NEpk is reflected on the pilot fuel injection amount and the main fuel injection amount, and the next fuel injection amount is adjusted. In the medium and high speed regions, the average engine speed NEave is reflected on the pilot fuel injection amount and the main fuel injection amount, and next the fuel injection amount is adjusted.

According to the third embodiment, the following effects can be obtained.

(a) The effects (a), (b), (c), and (d) according to the first embodiment can be obtained. Particularly, as the fuel injection amount calculating process, only the fuel injection amount calculating process C in FIG. 8 is performed, and the fuel injection amount calculating process A in FIG. 6 and the fuel injection amount calculating process B in FIG. 7 are not performed. Therefore, the program can be simplified.

[Fourth embodiment]

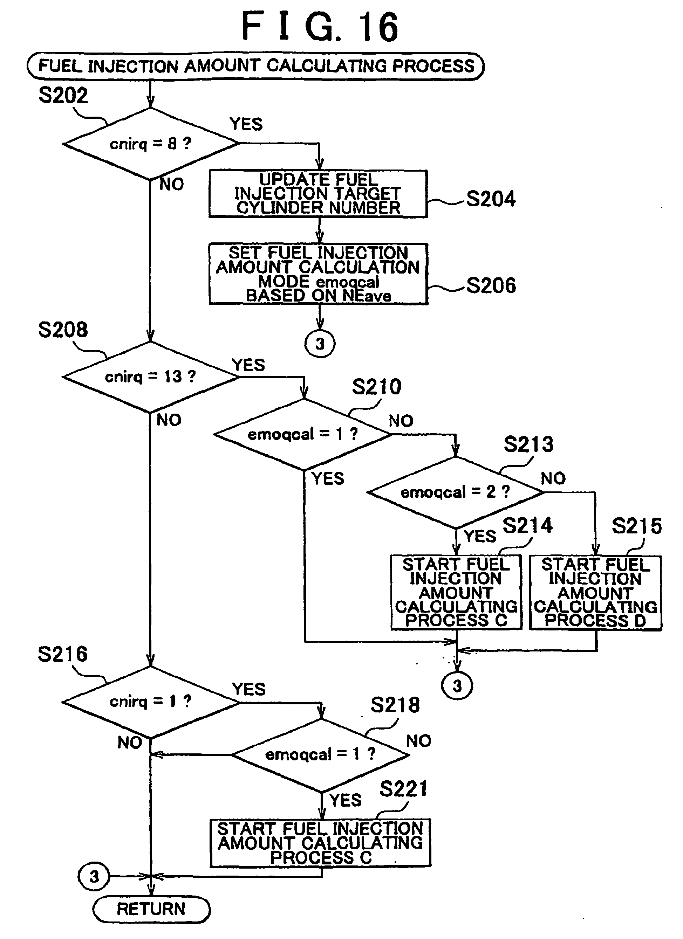

According to the embodiment, the fuel injection amount calculating process in FIG. 16 is performed instead of the fuel injection amount calculating process in FIG. 13 according to the second embodiment. In FIG. 16, in the case where the cnirq is "13" ("YES" in S208), when the emoqcal is "1" ("YES" in S210), the fuel injection amount calculating process A in FIG. 6 is not performed, and the process temporarily ends. In the case where the cnirq is "1" ("YES" in S216), when the emoqcal is "1" ("YES" in S218), the fuel injection amount calculating process C in FIG. 8 is performed (S221). The CPU included in the ECU 52 is the same as that of the fifth embodiment. The other configurations are the same as those of the fourth embodiment.

Therefore, according to the embodiment, the pilot fuel injection amount and the main fuel injection amount are calculated by the fuel injection amount calculating process C in FIG. 8 when the cnirq is "1" in the low speed region. In the medium speed region, the pilot fuel injection amount and the main fuel injection amount are calculated by the fuel injection amount calculating process C in FIG. 8 when the cnirq is "13". In the high speed region, the pilot fuel injection amount and the main fuel injection amount are calculated by the fuel injection amount calculating process D in FIG. 14 when the cnirq is "13".

The newest peak engine speed NEpk is reflected on the pilot fuel injection amount and the main fuel injection amount in the low speed region, and the next fuel injection amount is adjusted. In the medium and high speed regions, the average engine speed NEave is reflected on the pilot fuel injection amount and the main fuel injection amount, and the next fuel injection amount is adjusted. Particularly, in the high speed region, the main fuel injection amount is calculated based on the final fuel injection amount eqfin.

According to the fourth embodiment, the following effects can be obtained.

(a) The effect (a) according to the second embodiment can be obtained. Particularly, as the fuel injection amount calculating process, only the fuel injection amount calculating process C in FIG. 8 and the fuel injection amount calculating process D in FIG. 14 are performed. Accordingly, the program can be simplified.

[Other embodiments]

(a) In the above-mentioned embodiments, the calculation of the fuel injection amount eqgov2, eqgov3 for partial control may be performed using the peak engine speed NEpk which ha been obtained by the calculation time instead of using the average engine speed NEave regardless of whether being performed at the time interrupt process or at the angle interrupt process of the crank angle.

(b) In the above-mentioned embodiments, as the fuel supply system, the diesel engine of a common rail type is employed. However, a diesel engine using a fuel injection pump of a distribution type, in-line type or the like may be employed. The invention can be applied to a gasoline engine of an in-cylinder injection type, instead of the diesel engine, when the engine output is controlled using the fuel injection amount of the gasoline during stratified combustion, as in the case of the diesel engine.

In the case of the gasoline engine, the fuel injection amount may be calculated based on the accelerator opening ACCP and the average engine speed NEave, as in the case of the governor pattern in FIG. 10. The fuel injection amount may be calculated based on the throttle opening and the average engine speed NEave, or may be calculated based on the intake air amount and the average engine speed NEave.

(c) In the equation 5, the governor pattern fuel injection amount eqgov is set to the maximum values of each of the fuel injection amounts, in order to form the governor pattern shown in FIG. 10. However, another governor pattern may be used. For example, the governor pattern may be formed such that the governor pattern fuel injection amount eqgov is set using the combination of the maximum value and the minimum value of each of the fuel injection amounts.

(d) According to the above-mentioned embodiments, description is made concerning a four-cylinder diesel engine. In the case where an engine having six, eight or more cylinders is employed, the effect of the invention will be more obvious since the calculation load of the fuel injection amount for the CPU becomes heavier. Even in the case where the engine having more cylinders is employed, hunting and engine stalling are prevented, and a margin can be provided for the arithmetic load which is processable even when the speed increases.

When the engine speed is in the low speed region, the fuel injection amount is calculated at the first calculation timing (at the angle interrupt process of the crank angle) immediately after the detection of the peak engine speed (S220). Accordingly, the peak engine speed is reflected on the output with high responsiveness, and hunting and engine stalling can be prevented. When the engine speed is in the medium and high speed regions, the fuel injection amount is calculated at the second calculation timing which is prior to the first calculation timing (S214), and the fuel injection amounts which are obtained at the time interrupt process are actually reflected on the output. Accordingly, even in the medium and high speed regions, a margin is provided for the arithmetic processing, and a margin is further provided for another arithmetic processing which needs to be calculated at the first calculation timing. Therefore, according to the internal combustion engine output control method and device, even in the arithmetic processing circuit having a low processing speed, hunting and engine stalling are prevented, and a margin can be provided for the arithmetic computation even at high speed.

## Claims

1. An internal combustion engine output control device for calculating an engine output control amount (eqgov) based on an engine speed including at least an instantaneous engine speed (NEpk), and for controlling an engine output based on the engine output control amount (eqgov), comprising:

   engine speed detecting means (40) for detecting the engine speed;
   first calculating means (process B; process C) for calculating the engine output control amount (eqgov) at a first calculation timing (S220; S221) which is provided in a period after detection of the instantaneous engine speed (NEpk) until engine output control timing (M) based on an engine output control amount group that includes a plurality of low speed side engine output control amounts (eqgov0, eqgov1) which contribute to the engine output control in the low speed side and based on the newest instantaneous engine speed (NEpk) that is detected by the engine speed detecting means (40) immediately before the engine output control timing (M) when the engine speed detected by the engine speed detecting means (40) is in a low speed region (emoqcal = 1);
   second calculating means (process C; process D) for calculating the engine output control amount (eqgov) at a second calculation timing (S214; S215) provided at an engine rotation angle that is prior to the first calculation timing (S220; S221) based on the engine output control amount group when the engine speed detected by the engine speed detecting means (40) is outside the low speed region (emoqcal ≠ 1); and
   third calculating means (process shown in Fig. 9) for calculating engine output control amounts (eqgov2, eqgov3) other than the low speed side engine output control amounts (eqgov0, eqgov1) among the engine output control amount group at a time interrupt process regardless of the engine speed detected by the engine speed detecting means (40).

2. The internal combustion engine output control device according to claim 1, wherein the low speed side engine output control amounts (eqgov0, eqgov1) include an output control amount (eqgov0) which contributes to the engine output control in a region which is on the low speed side in the low speed region (emoqcal = 1).

3. The internal combustion engine output control device according to claim 1 or 2, wherein the low speed side engine output control amounts (eqgov0, eqgov1) include an output control amount (eqgov0) which contributes to idle speed control.

4. The internal combustion engine output control device according to claim 1 or 2, wherein the low speed side engine output control amounts (eqgov0, eqgov1) include an output control amount (eqgov0) which contributes to prevention of engine stalling.

5. The internal combustion engine output control device according to any one of claims 1 through 4, wherein, when the engine output is controlled based on the engine output control amounts (eqgov2, eqgov3) other than the low speed side engine output control amounts (eqgov0, eqgov1), the engine output control amount (eqgov) is corrected based on a correction amount (ISC) which is obtained while the engine output is controlled based on the low speed side engine output control amount (eqgov0, eqgov1).

6. The internal combustion engine output control device according to claims 1 through 5, wherein the third calculating means (process shown in Fig. 9) calculates the engine output control amounts (eqgov2, eqgov3) other than the low speed side engine output control amounts (eqgov0, eqgov1) among the engine output control amount group based on an average engine speed (NEave) detected by the engine speed detecting means (40).

7. The internal combustion engine output control device according to any one of claims 1 through 6, wherein the first calculating means (process B; process C) and the second calculating means (process C; process D) determine whether the engine speed is in or outside the low speed region (emoqcal = 1) based on an average engine speed (NEave) detected by the engine speed detecting means (40).

8. The internal combustion engine output control device according to any one of claims 1 through 7, wherein the engine output control amount (eqgov) is a fuel injection amount.

9. The internal combustion engine output control device according to any one of claims 1 through 8, wherein the internal combustion engine is a diesel engine (2).

**Patentansprüche**

1. Brennkraftmaschinenleistungs-Steuerungsvorrichtung zur Berechnung eines Maschinenleistungs-Steuerungsbetrags (eqgov) beruhend auf einer Maschinendrehzahl, die zumindest eine momentane Maschinendrehzahl (NEpk) einschließt, und zur Steuerung einer Maschinenleistung beruhend auf dem Maschinenleistungs-Steuerungsbetrag (eqgov), mit:

   einer Maschinendrehzahl-Erfassungseinrichtung (40) zur Erfassung der Maschinendrehzahl;
   einer ersten Berechnungseinrichtung (Prozess B; Prozess C) zur Berechnung des Maschinenleistungs-Steuerungsbetrags (eqgov) bei einem ersten Berechnungszeitpunkt (S220; S221), der in einem Zeitraum nach Erfassung der momentanen Maschinendrehzahl (NEpk) bis zum Maschinenleistungs-Steuerungszeitpunkt (M) vorgesehen ist, beruhend auf einer Maschinenleistungs-Steuerungsbetragsgruppe, die eine Vielzahl von niederdrehzahlseitigen Maschinenleistungs-Steuerungsbeträgen (eqgov0, eqgov1) einschließt, die zur Maschinenleistungssteuerung auf der Seite niedriger Drehzahl beitragen, und beruhend auf der neuesten momentanen Maschinendrehzahl (NEpk), die von der Maschinendrehzahl-Erfassungseinrichtung (40) unmittelbar vor dem Maschinenleistungs-Steuerungszeitpunkt (M) erfasst wird, wenn die von der Maschinendrehzahl-Erfassungseinrichtung (40) erfasste Maschinendrehzahl in einem Bereich niedriger Drehzahl liegt (emoqcal = 1);
   einer zweiten Berechnungseinrichtung (Prozess C; Prozess D) zur Berechnung des Maschinenleistungs-Steuerungsbetrags (eqgov) bei einem zweiten Berechnungszeitpunkt (S214; S215), der bei einem Maschinendrehwinkel vorgesehen ist, der vor dem ersten Berechnungszeitpunkt (S220; S221) liegt, beruhend auf der Maschinenleistungs-Steuerungsbetragsgruppe, wenn die von der Maschinendrehzahl-Erfassungseinrichtung (40) erfasste Maschinendrehzahl außerhalb des Bereichs niedriger Drehzahl liegt (emoqcal ≠ 1); und
   einer dritten Berechnungseinrichtung (Prozess in Fig. 9) zur Berechnung anderer Maschinenleistungs-Steuerungsbeträge (eqgov2, eqgov3) als die niederdrehzahlseitigen Maschinenleistungs-Steuerungsbeträge (eqgov0, eqgov1) inmitten der Maschinenleistungs-Steuerungsbetragsgruppe bei einem Zeitunterbrechungsprozess ohne Rücksicht auf die von der Maschinendrehzahl-Erfassungseinrichtung (40) erfasste Maschinendrehzahl.

**2.** Brennkraftmaschinenleistungs-Steuerungsvorrichtung nach Anspruch 1, wobei die niederdrehzahlseitigen Maschinenleistungs-Steuerungsbeträge (eqgov0, eqgov1) einen Leistungssteuerungsbetrag (eqgov0) einschließen, der zur Maschinenleistungssteuerung in einem Bereich beiträgt, der in dem Bereich niedriger Drehzahl (emoqcal = 1) auf der Seite niedriger Drehzahl liegt.

**3.** Brennkraftmaschinenleistungs-Steuerungsvorrichtung nach Anspruch 1 oder 2, wobei die niederdrehzahlseitigen Maschinenleistungs-Steuerungsbeträge (eqgov0, eqgov1) einen Leistungssteuerungsbetrag (eqgov0) einschließen, der zur Leerlaufdrehzahlsteuerung beiträgt.

**4.** Brennkraftmaschinenleistungs-Steuerungsvorrichtung nach Anspruch 1 oder 2, wobei die niederdrehzahlseitigen Maschinenleistungs-Steuerungsbeträge (eqgov0, eqgov1) einen Leistungssteuerungsbetrag (eqgov0) einschließen, der zur Verhinderung von Maschinenabwürgen beiträgt.

**5.** Brennkraftmaschinenleistungs-Steuerungsvorrichtung nach einem der Ansprüche 1 bis 4, wobei der Maschinenleistungs-Steuerungsbetrag (eqgov), wenn die Maschinenleistung beruhend auf den anderen Maschinenleistungs-Steuerungsbeträgen (eqgov2, eqgov3) als den niederdrehzahlseitigen Maschinenleistungs-Steuerungsbeträgen (eqgov0, eqgov1) gesteuert wird, beruhend auf einem Korrekturbetrag (ISC) korrigiert wird, der ermittelt wird, während die Maschinenleistung beruhend auf dem niederdrehzahlseitigen Maschinenleistungs-Steuerungsbetrag (eqgov0, eqgov1) gesteuert wird.

**6.** Brennkraftmaschinenleistungs-Steuerungsvorrichtung nach Anspruch 1 bis 5, wobei die dritte Berechnungseinrichtung (Prozess in Fig. 9) die anderen Maschinenleistungs-Steuerungsbeträge (eqgov2, eqgov3) als die niederdrehzahlseitigen Maschinenleistungs-Steuerungsbeträge (eqgov0, eqgov1) inmitten der Maschinenleistungs-Steuerungsbetragsgruppe beruhend auf einer von der Maschinendrehzahl-Erfassungseinrichtung (40) erfassten mittleren Maschinendrehzahl (NEave) berechnet.

**7.** Brennkraftmaschinenleistungs-Steuerungsvorrichtung nach einem der Ansprüche 1 bis 6, wobei die erste Berechnungseinrichtung (Prozess B; Prozess C) und die zweite Berechnungseinrichtung (Prozess C; Prozess D) beruhend auf einer von der Maschinendrehzahl-Erfassungseinrichtung (40) erfassten mittleren Maschinendrehzahl (NEave) bestimmen, ob die Maschinendrehzahl innerhalb oder außerhalb des Bereichs niedriger Drehzahl liegt (emoqcal = 1).

**8.** Brennkraftmaschinenleistungs-Steuerungsvorrichtung nach einem der Ansprüche 1 bis 7, wobei der Maschinenleistungs-Steuerungsbetrag (eqgov) ein Kraftstoffeinspritzbetrag ist.

**9.** Brennkraftmaschinenleistungs-Steuerungsvorrichtung nach einem der Ansprüche 1 bis 8, wobei die Brennkraftmaschine ein Dieselmotor (2) ist.

**Revendications**

**1.** Appareil de commande de sortie d'un moteur à combustion interne destiné à calculer un degré de commande de sortie de moteur (eqgov) sur la base d'une vitesse du moteur comportant au moins une vitesse instantanée du moteur (NEpk), et à commander une sortie de moteur sur la base du degré de commande de sortie de moteur (eqgov), comprenant :

un moyen de détection de vitesse du moteur (40) pour détecter la vitesse du moteur ;
un premier moyen de calcul (processus B; processus C) pour calculer le degré de commande de sortie de moteur (eqgov) à un premier moment de calcul (S220 ; S221) qui est prévu postérieurement à la détection de la vitesse instantanée du moteur (NEpk) jusqu'au moment (M) de commande de sortie de moteur sur la base d'un groupe de degré de commande de sortie de moteur qui comporte une pluralité de degrés de commande de sortie du côté basse vitesse du moteur (eqgov0, eqgov1) qui contribuent à la commande de sortie du côté basse vitesse du moteur et sur la base de la plus récente vitesse instantanée du moteur (NEpk) qui est détectée par le moyen de détection de vitesse du moteur (40) juste avant le moment de commande de sortie de moteur (M) lorsque la vitesse du moteur détectée par le moyen de détection de vitesse du moteur (40) est dans une zone basse vitesse (emoqcal=1) ;
un deuxième moyen de calcul (processus C ; processus D) pour calculer le degré de commande de sortie de moteur (eqgov) à un deuxième moment de calcul (S214 ; S215) prévu au niveau d'un angle de rotation du moteur qui est antérieur au premier moment de calcul (S220 ; S221) sur la base du groupe de degré de commande de sortie de moteur lorsque la vitesse du moteur détectée par le moyen de détection de vitesse du moteur (40) est en dehors de la zone basse vitesse (emoqcal≠1) ; et

un troisième moyen de calcul (processus représenté dans la fig.9) pour calculer les degrés de commande de sortie (eqgov2, eqgov3) autres que les degrés de commande de sortie du côté basse vitesse du moteur (eqgov0, eqgov1) parmi le groupe de degré de commande de sortie de moteur pendant un processus d'interruption de temps indépendamment de la vitesse du moteur détectée par le moyen de détection de vitesse du moteur (40).

2. Appareil de commande de sortie d'un moteur à combustion interne selon la revendication 1, dans lequel les degrés de commande de sortie du côté basse vitesse du moteur (eqgov0, eqgov1) comportent un degré de commande de sortie (eqgov0) qui contribue à la commande de sortie de moteur dans une zone qui est du côté basse vitesse dans la zone basse vitesse (emoqcal=1).

3. Appareil de commande de sortie d'un moteur à combustion interne selon la revendication 1 ou 2, dans lequel les degrés de commande de sortie du côté basse vitesse du moteur (eqgov0, eqgov1) comportent un degré de commande de sortie (eqgov0) qui contribue à commander un ralenti.

4. Appareil de commande de sortie d'un moteur à combustion interne selon la revendication 1 ou 2, dans lequel les degrés de commande de sortie du côté basse vitesse du moteur (eqgov0, eqgov1) comportent un degré de commande de sortie (eqgov0) qui contribue à empêcher le calage du moteur.

5. Appareil de commande de sortie d'un moteur à combustion interne selon l'une quelconque des revendications 1 à 4, dans lequel, lorsque la sortie de moteur est commandée sur la base des degrés de commande de sortie de moteur (eqgov2, eqgov3) autres que les degrés de commande de sortie du côté basse vitesse du moteur (eqgov0, eqgov1), le degré de commande de sortie de moteur (eqgov) est corrigé sur la base d'un degré de correction (ISC) qui est obtenu lorsque la sortie de moteur est commandée sur la base du degré de commande de sortie du côté basse vitesse du moteur (eqgov0, eqgov1).

6. Appareil de commande de sortie d'un moteur à combustion interne selon les revendications 1 à 5, dans lequel le troisième moyen de calcul (processus représenté par la Fig. 9) calcule les degrés de commande de sortie de moteur (eqgov2, eqgov3) autres que les degrés de commande de sortie du côté basse vitesse du moteur (eqgov0, eqgov1) parmi le groupe de degré de commande de sortie de moteur sur la base d'une vitesse moyenne du moteur (NEave) détectée par le moyen de détection de vitesse du moteur (40).

7. Appareil de commande de sortie de moteur à combustion interne selon l'une quelconque des revendications 1 à 6, dans lequel le premier moyen de calcul (processus B ; processus de C) et le deuxième moyen de calcul (processus C ; processus D) déterminent si la vitesse du moteur est dans ou en dehors de la zone basse vitesse (emoqcal≈1) sur la base d'une vitesse moyenne du moteur (NEave) détectée par le moyen de détection de vitesse du moteur (40).

8. Appareil de commande de sortie d'un moteur à combustion interne selon l'une quelconque des revendications 1 à 7, dans lequel le degré de commande de sortie de moteur (eqgov) est un degré d'injection de carburant.

9. Appareil de commande de sortie d'un moteur à combustion interne selon l'une quelconque des revendications 1 à 8, dans lequel le moteur à combustion interne est un moteur diesel (2).

# FIG. 1

EP 1 416 146 B1

EP 1 416 146 B1

# F I G. 2

# F I G. 3

```
    ( ENGINE SPEED DETECTING PROCESS )
                    │
         ┌──────────────────────┐
         │      READ tne         │──S100
         └──────────────────────┘
                    │
         ┌──────────────────────┐
         │  tnint ← tne - tneold │──S102
         └──────────────────────┘
                    │
         ┌──────────────────────┐
         │    tneold ← tne       │──S104
         └──────────────────────┘
                    │
              S106  ◇
        IS PRESENT ROTATION PULSE    NO      S109 ◇
        SIGNAL REFERENCE  ──────────────► cnirq = 17 ?
        POSITION SIGNAL ?      YES          YES│  NO
              │ YES ◄─────────────────────────┘
              │                                │
         S108 │                          S110  │
    ┌──────────────┐              ┌──────────────────┐
    │  cnirq ← 0   │              │ cnirq ← cnirq + 1 │
    └──────────────┘              └──────────────────┘
              │◄────────────────────────┘
    ┌──────────────────────┐
    │ wt60c ← wt60c + tnint │──S112
    └──────────────────────┘
    ┌──────────────────────┐
    │ wt50c ← wt50c + tnint │──S114
    └──────────────────────┘
              S116 ◇
          cnirq = 14 ?  ── NO ──┐
              │ YES              │
    ┌──────────────┐            │
    │  wt50c ← 0   │──S118      │
    └──────────────┘            │
              │◄────────────────┘
             (1)
```

21

# F I G. 4

S120

cnirq = 1 ? —YES→ ne1←wt60c ~S122

NO

NEpk←f50(wt50c) ~S124

②

S126

cnirq = 7 ? —YES→ ne2←wt60c ~S128

NO

S130

NO← cnirq = 13 ?

YES

ne3←wt60c ~S132

②

NEave←f180(ne1+ne2+ne3) ~S134

wt60c←0 ~S136

RETURN

22

EP 1 416 146 B1

# FIG. 5

FUEL INJECTION AMOUNT CALCULATING PROCESS

S202  cnirq = 8 ?
— YES → UPDATE FUEL INJECTION TARGET CYLINDER NUMBER — S204
→ SET FUEL INJECTION AMOUNT CALCULATION MODE emoqcal BASED ON NEave — S206 → (3)
NO ↓

S208  cnirq = 13 ?
— YES → S210 emoqcal = 1 ?
— NO → S214 START FUEL INJECTION AMOUNT CALCULATING PROCESS C
— YES → S212 START FUEL INJECTION AMOUNT CALCULATING PROCESS A → (3)
NO ↓

S216  cnirq = 1 ?
— YES → S218 emoqcal = 1 ?
— NO →
— YES → S220 START FUEL INJECTION AMOUNT CALCULATING PROCESS B
NO ↓

(3) → RETURN

# F I G. 6

```
( FUEL INJECTION AMOUNT CALCULATING PROCESS A )
                           │
                           ▼
        ┌──────────────────────────────────┐
        │ CALCULATE eqgov BASED ON          │ ── S302
        │ eqgov0, eqgov1, eqgov2, eqgov3    │
        └──────────────────────────────────┘
                           │
                           ▼
        ┌──────────────────────────────────┐
        │ CALCULATE eqfin BASED ON eqgov    │ ── S304
        └──────────────────────────────────┘
                           │
                           ▼
        ┌──────────────────────────────────┐
        │ CALCULATE PILOT FUEL INJECTION    │ ── S306
        │ AMOUNT BASED ON eqfin             │
        └──────────────────────────────────┘
                           │
                           ▼
                     (   END   )
```

# F I G. 7

```
( FUEL INJECTION AMOUNT CALCULATING PROCESS B )
                           │
                           ▼
        ┌──────────────────────────────────┐
        │ CALCULATE eqgov0 BASED ON NEpk    │ ── S312
        └──────────────────────────────────┘
                           │
                           ▼
        ┌──────────────────────────────────┐
        │ CALCULATE eqgov1 BASED ON         │ ── S314
        │ NEpk AND ACCP                     │
        └──────────────────────────────────┘
                           │
                           ▼
        ┌──────────────────────────────────┐
        │ CALCULATE eqgov BASED ON          │ ── S316
        │ eqgov0, eqgov1, eqgov2, eqgov3    │
        └──────────────────────────────────┘
                           │
                           ▼
        ┌──────────────────────────────────┐
        │ CALCULATE eqfin BASED ON eqgov    │ ── S318
        └──────────────────────────────────┘
                           │
                           ▼
        ┌──────────────────────────────────┐
        │ CALCULATE eqfinc BASED ON eqfin   │ ── S320
        └──────────────────────────────────┘
                           │
                           ▼
        ┌──────────────────────────────────┐
        │ CALCULATE MAIN FUEL INJECTION     │ ── S322
        │ AMOUNT BASED ON eqfinc AND        │
        │ PILOT FUEL INJECTION AMOUNT       │
        └──────────────────────────────────┘
                           │
                           ▼
                     (   END   )
```

# F I G. 8

FUEL INJECTION AMOUNT CALCULATING PROCESS C

CALCULATE eqgov0 BASED ON NEpk — S332

CALCULATE eqgov1 BASED ON NEpk AND ACCP — S334

CALCULATE eqgov BASED ON eqgov0, eqgov1, eqgov2, eqgov3 — S336

CALCULATE eqfin BASED ON eqgov — S338

CALCULATE eqfinc BASED ON eqfin — S340

CALCULATE PILOT FUEL INJECTION AMOUNT BASED ON eqfin — S342

CALCULATE MAIN FUEL INJECTION AMOUNT BASED ON eqfinc AND PILOT FUEL INJECTION AMOUNT — S344

END

# F I G. 9

PROCESS FOR CALCULATING eqgov2, eqgov3

CALCULATE eqgov2 BASED ON NEave AND ACCP ~S402

CALCULATE eqgov3 BASED ON NEave AND ACCP ~S404

CALCULATE eqfull BASED ON NEave ~S406

RETURN

# F I G. 10

EP 1 416 146 B1

# FIG. 11

[ emoqcal=1 ]

# F I G. 12

[ emoqcal=2or3 ]

cnirq= 5 6 7 8 9 10 11 12 13 14 15 0 1 2 3 4 5 6 7 8 9 10 11 12 13 14 15 16 17 0 1 2 3 4 5 6 7 8 9 10 11 12

ROTATION
PULSE

NEave

NEpk

FUEL
INJECTION   #1
TARGET      #3
CYLINDER    #4
            #2

ARITHMETIC
COMPUTATION  ON
ON FUEL
INJECTION
AMOUNT       OFF
CALCULATION

FUEL
INJECTION     P     M              P      M              P      M
TIMING

(TDC)              (TDC)              (TDC)      TIME

EP 1 416 146 B1

# F I G. 13

FUEL INJECTION AMOUNT CALCULATING PROCESS

S202 — cnirq = 8 ?

**YES** →

S204 — UPDATE FUEL INJECTION TARGET CYLINDER NUMBER

S206 — SET FUEL INJECTION AMOUNT CALCULATION MODE emoqcal BASED ON NEave

→ ③

**NO** ↓

S208 — cnirq = 13 ?

**YES** →

S210 — emoqcal = 1 ?

**NO** →

S213 — emoqcal = 2 ?

**YES** ↓ (S212)

S212 — START FUEL INJECTION AMOUNT CALCULATING PROCESS A

**YES** ↓ (S214)

S214 — START FUEL INJECTION AMOUNT CALCULATING PROCESS C

**NO** ↓ (S215)

S215 — START FUEL INJECTION AMOUNT CALCULATING PROCESS D

→ ③

**NO** ↓

S216 — cnirq = 1 ?

**YES** →

S218 — emoqcal = 1 ?

**NO** →

**YES** ↓ (S220)

S220 — START FUEL INJECTION AMOUNT CALCULATING PROCESS B

③ →

RETURN

# F I G. 14

```
( FUEL INJECTION AMOUNT CALCULATING PROCESS D )
                          │
                          ▼
        ┌──────────────────────────────────┐
        │ CALCULATE eqgov0 BASED ON NEpk │───〜 S402
        └──────────────────────────────────┘
                          │
                          ▼
        ┌──────────────────────────────────┐
        │   CALCULATE eqgov1 BASED ON      │
        │        NEpk AND ACCP             │───〜 S404
        └──────────────────────────────────┘
                          │
                          ▼
        ┌──────────────────────────────────┐
        │    CALCULATE eqgov BASED ON      │
        │  eqgov0, eqgov1, eqgov2, eqgov3  │───〜 S406
        └──────────────────────────────────┘
                          │
                          ▼
        ┌──────────────────────────────────┐
        │   CALCULATE eqfin BASED ON eqgov  │───〜 S408
        └──────────────────────────────────┘
                          │
                          ▼
        ┌──────────────────────────────────┐
        │ CALCULATE PILOT FUEL INJECTION   │
        │     AMOUNT BASED ON eqfin        │───〜 S410
        └──────────────────────────────────┘
                          │
                          ▼
        ┌──────────────────────────────────┐
        │ CALCULATE MAIN FUEL INJECTION    │
        │     AMOUNT BASED ON eqfin        │───〜 S412
        └──────────────────────────────────┘
                          │
                          ▼
                    (    END    )
```

EP 1 416 146 B1

# F I G. 15

( FUEL INJECTION AMOUNT CALCULATING PROCESS )

S202  cnirq = 8 ?
YES →

UPDATE FUEL
INJECTION TARGET
CYLINDER NUMBER — S204

SET FUEL INJECTION
AMOUNT CALCULATION
MODE emoqcal — S206
BASED ON NEave

(3)

NO ↓

S208  cnirq = 13 ?
YES →

S210  emoqcal = 1 ?  NO →

YES ↓

S214
START FUEL INJECTION
AMOUNT CALCULATING
PROCESS C

(3)

NO ↓

S216  cnirq = 1 ?
YES →

S218  emoqcal = 1 ?
NO →

YES ↓

S221
START FUEL INJECTION
AMOUNT CALCULATING
PROCESS C

(3) →

NO ↓

( RETURN )

32

# F I G. 16

```
┌──────────────────────────────────────────────────┐
│  FUEL INJECTION AMOUNT CALCULATING PROCESS  │
└──────────────────────────────────────────────────┘
```

S202 — cnirq = 8 ? — YES → UPDATE FUEL INJECTION TARGET CYLINDER NUMBER (S204)

NO

SET FUEL INJECTION AMOUNT CALCULATION MODE emoqcal BASED ON NEave (S206)

→ ③

S208 — cnirq = 13 ? — YES → S210 emoqcal = 1 ?

NO

S210 emoqcal = 1 ? — NO → S213 emoqcal = 2 ?

YES (S210) →

S213 emoqcal = 2 ? — NO → START FUEL INJECTION AMOUNT CALCULATING PROCESS D (S215)

YES (S213) → START FUEL INJECTION AMOUNT CALCULATING PROCESS C (S214)

→ ③

S216 — cnirq = 1 ? — YES → S218 emoqcal = 1 ?

NO

S218 emoqcal = 1 ? — NO →

YES → START FUEL INJECTION AMOUNT CALCULATING PROCESS C (S221)

③ →

RETURN

**EP 1 416 146 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 63067145 A
- JP 3070842 A
- JP 2513262 B
- EP 0261473 A